(19) Europäisches Patentamt
European Patent Office
Office européen des brevets

(11) **EP 1 552 405 B1**

(12) **EUROPEAN PATENT SPECIFICATION**

(45) Date of publication and mention
of the grant of the patent:
**03.06.2009 Bulletin 2009/23**

(21) Application number: **03793067.4**

(22) Date of filing: **15.08.2003**

(51) Int Cl.:
**G06F 15/00** (2006.01)

(86) International application number:
**PCT/US2003/025555**

(87) International publication number:
**WO 2004/019159 (04.03.2004 Gazette 2004/10)**

(54) **EFFICIENT JOINT DETECTION**

EFFIZIENTE GEMEINSAME DETEKTION

DETECTION CONJOINTE PUISSANTE

(84) Designated Contracting States:
**AT BE BG CH CY CZ DE DK EE ES FI FR GB GR
HU IE IT LI LU MC NL PT RO SE SI SK TR**

(30) Priority: **20.08.2002 US 404561 P**

(43) Date of publication of application:
**13.07.2005 Bulletin 2005/28**

(73) Proprietor: **INTERDIGITAL TECHNOLOGY
CORPORATION
Wilmington, DE 19810 (US)**

(72) Inventors:
• **KWAK, Jaeyoung
Morganville, NJ 07751 (US)**
• **HAIM, John, W.
Baldwin, NY 11510 (US)**
• **ZEIRA, Ariela
Huntington, NY 11743 (US)**
• **PAN, Jung-Lin
Selden, NY 11784 (US)**

(74) Representative: **Pierrou, Mattias
Awapatent AB
P.O. Box 45 086
104 30 Stockholm (SE)**

(56) References cited:
**WO-A-02/089346**     **US-A1- 2003 021 335
US-A1- 2003 026 325**

• **VOLLMER M ET AL: "COMPARATIVE STUDY OF
JOINT-DETECTION TECHNIQUES FOR TD-CDMA
BASED MOBILE RADIO SYSTEMS" IEEE
JOURNAL ON SELECTED AREAS IN
COMMUNICATIONS, IEEE SERVICE CENTER,
PISCATAWAY, NJ, US, vol. 19, no. 8, August 2001
(2001-08), pages 1461-1475, XP001115203 ISSN:
0733-8716**
• **PAN J-L ET AL: "LOW COMPLEXITY DATA
DETECTION USING FAST FOURIER
TRANSFORM DECOMPOSITION OF CHANNEL
CORRELATION MARIX" GLOBECOM'01. 2001
IEEE GLOBAL TELECOMMUNICATIONS
CONFERENCE. SAN ANTONIO, TX, NOV. 25 - 29,
2001, IEEE GLOBAL TELECOMMUNICATIONS
CONFERENCE, NEW YORK, NY : IEEE, US, vol.
VOL. 2 OF 6, 25 November 2001 (2001-11-25),
pages 1322-1326, XP001099319 ISBN:
0-7803-7206-9**

EP 1 552 405 B1

**Description**

BACKGROUND

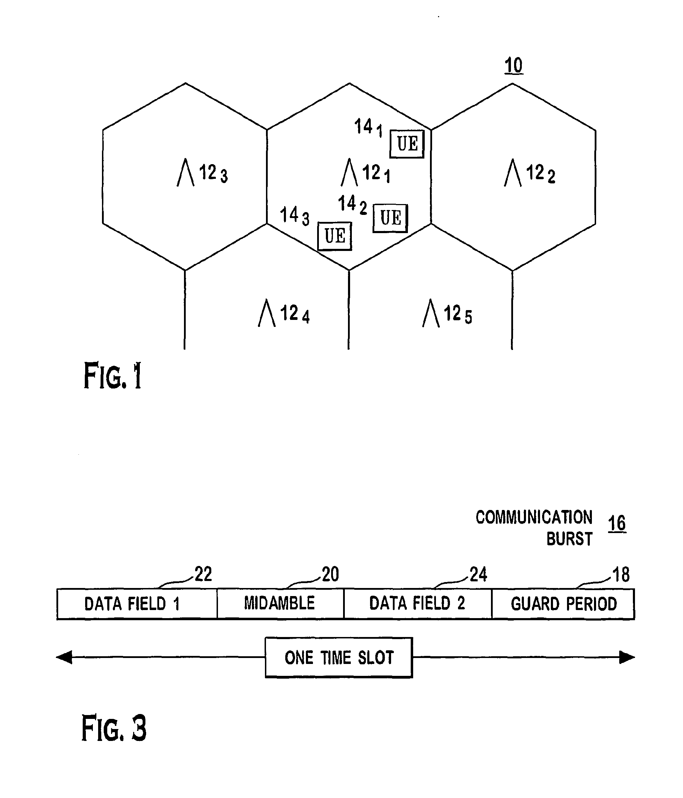

Figure 1 is an illustration of a wireless communication system 10. The communication system 10 has base stations $12_1$ to $12_5$ (12) which communicate with user equipments (UEs) $14_1$ to $14_3$ (14). Each base station 12 has an associated operational area, where it communicates with UEs 14 in its operational area.

In some communication systems, such as frequency division duplex using code division multiple access (FDD/CDMA) and time division duplex using code division multiple access (TDD/CDMA), multiple communications are sent over the same frequency spectrum. These communications are differentiated by their channelization codes. To more efficiently use the frequency spectrum, TDD/CDMA communication systems use repeating frames divided into timeslots for communication. A communication sent in such a system will have one or multiple associated codes and timeslots assigned to it.

Since multiple communications may be sent in the same frequency spectrum and at the same time, a receiver in such a system must distinguish between the multiple communications. One approach to detecting such signals is multiuser detection (MUD). In MUD, signals associated with all the UEs 14, are detected simultaneously. For TDD/CDMA systems, one of the popular MUD techniques is a joint detection technique using block linear equalizer (BLE-JD). Techniques for implementing BLE-JD include using a Cholesky or an approximate Cholesky decomposition. These approaches have high complexity. The high complexity leads to increased power consumption, which at the UE 14 results in reduced battery life.

The document "Comparative Study of Joint-Detection Techniques for TD-CDMA Based Mobile Radio Systems" by M. Vollmer et al, IEEE Journal on selected areas in communications, Vol. 19, No. 8, August 2001 presents and compares several techniques for joint-detection for TD-CDMA. A single system matrix is produced for all transmitted signals.

WO 02/089346 A1 which is a document under Article 54(3) of the European Patent Convention discloses a method for fast joint detection where a combined channel response matrix is produced for all transmitted signals.

Accordingly, it is desirable to have computationally efficient approaches to detecting received data.

SUMMARY

*K* data signals, or bursts, are transmitted over a shared spectrum in a code division multiple access communication format. A combined signal is received and sampled over the shared spectrum, as a plurality of received vector versions. The combined signal includes the *K* transmitted data signals. A plurality of system matrices and an associated covariance matrix using codes and estimated impulse responses of the *K* data signals is produced. Each system matrix corresponds to a received vector version. The system and covariance matrices are extended and approximated as block circulant matrices. A diagonal matrix of each of the extended and approximated system and covariance matrices are determined by prime factor algorithm - fast Fourier transform (PFA-FFT) without division of the matrices. The received vector versions are extended. A product of the diagonal matrices and the extended received vector versions is taken. An inverse block discrete Fourier transform is performed by a PFA-FFT on a result of the product to produce the estimated data of the K data signals.

BRIEF DESCRIPTION OF THE DRAWING(S)

Figure 1 is a wireless communication system.

Figure 2 is a simplified transmitter and an efficient joint detection receiver.

Figure 3 is an illustration of a communication burst.

Figures 4a and 4b are a flow chart of a preferred embodiment for efficient joint detection.

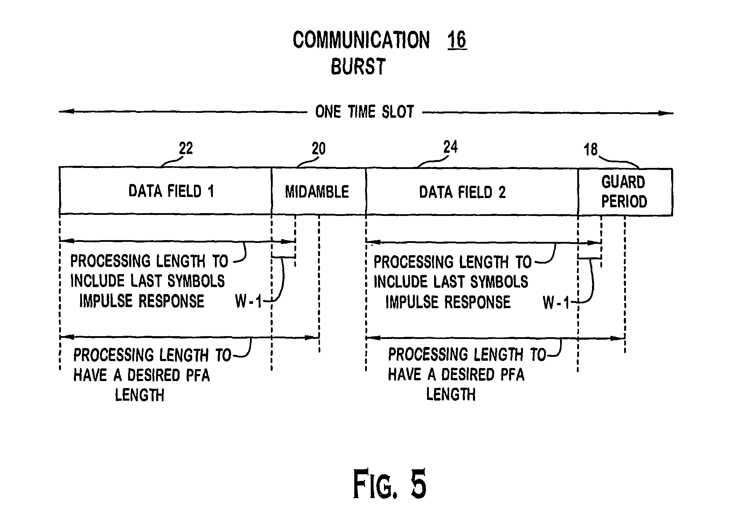

Figure 5 is an illustration of a data burst indicating extended processing areas.

Figure 6 is a block diagram of a preferred implementation of efficient joint detection.

Figure 7 is a simplified receiver having multiple antennas.

Figure 8 is a simplified receiver sampling the received signal using fractional sampling.

Figure 9 is a simplified receiver having multiple antennas and using fractional sampling.

Figure 10 is a block diagram of a preferred implementation of efficient joint detection for fractional sampling or receive diversity.

DETAILED DESCRIPTION OF THE PREFERRED EMBODIMENT(S)

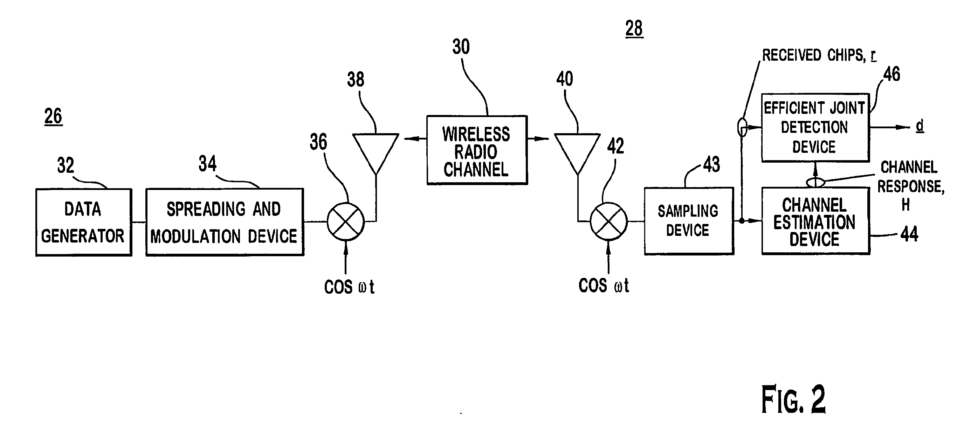

Figure 2 illustrates a simplified transmitter 26 and receiver 28 using efficient joint detection in a TDD/CDMA communication system, although efficient joint detection is applicable to other systems, such as FDD/CDMA. In a typical system, a transmitter 26 is in each UE 14 and multiple transmitting circuits 26 sending multiple communications are in each base station 12. The joint detection receiver 28 may be at a base station 12, UEs 14 or both.

The transmitter 26 sends data over a wireless radio channel 30. A data generator 32 in the transmitter 26 generates data to be communicated to the receiver 28. A modulation/spreading/training sequence insertion device 34 spreads the data with the appropriate code(s) and makes the spread reference data time-multiplexed with a midamble training sequence in the appropriate assigned time slot, producing a communication burst or bursts.

A typical communication burst 16 has a midamble 20, a guard period 18 and two data fields 22, 24, as shown in Figure 3. The midamble 20 separates the two data fields 22, 24 and the guard period 18 separates the communication bursts to allow for the difference in arrival times of bursts transmitted from different transmitters 26. The two data fields 22, 24 contain the communication burst's data.

The communication burst(s) are modulated by a modulator 36 to radio frequency (RF). An antenna 38 radiates the RF signal through the wireless radio channel 30 to an antenna 40 of the receiver 28. The type of modulation used for the transmitted communication can be any of those known to those skilled in the art, such as quadrature phase shift keying (QPSK) or M-ary quadrature amplitude modulation (QAM).

The antenna 40 of the receiver 28 receives various radio frequency signals. The received signals are demodulated by a demodulator 42 to produce a baseband signal. The baseband signal is sampled by a sampling device 43, such as one or multiple analog to digital converters, at the chip rate of the transmitted bursts. The samples are processed, such as by a channel estimation device 44 and an efficient joint detection device 46, in the time slot and with the appropriate codes assigned to the received bursts. The channel estimation device 44 uses the midamble training sequence component in the baseband samples to provide channel information, such as channel impulse responses. The channel information is used by the efficient joint detection device 46 to estimate the transmitted data of the received communication bursts as soft symbols.

The efficient joint detection device 46 uses the channel information provided by the channel estimation device 44 and the known spreading codes used by the transmitter 26 to estimate the data of the desired received communication burst(s).

Although efficient joint detection is explained using the third generation partnership project (3GPP) universal terrestrial radio access (UTRA) TDD system as the underlying communication system, it is applicable to other systems. That system is a direct sequence wideband CDMA (W-CDMA) system, where the uplink and downlink transmissions are confined to mutually exclusive timeslots.

The receiver 28 receives a total of K bursts that arrive simultaneously, within one observation interval. For the 3GPP UTRA TDD system, each data field of a time slot corresponds to one observation interval. For a frequency division duplex (FDD) CDMA system, the received signals are continuous, i.e., not in bursts. To handle the continuous signals, FDD systems divide the received signals into time segments prior to applying efficient joint detection.

A code used for a $k^{th}$ burst is represented as $\underline{c}^{(k)}$. The K bursts may originate from $K$ different transmitters or for multi-code transmissions, less than $K$ different transmitters.

Each data field of a communication burst has a predetermined number of transmitted symbols, *Ns*. Each symbol is transmitted using a predetermined number of chips, which is the spreading factor, *Q*. Accordingly, each data field has *Ns* x *Q* chips. After passing through the wireless radio channel, which can introduce a delay spread of up to W-1 chips, the observation interval at the receiver is of length *Q* x *Ns* + *W* -1 chips.

The symbol response vector $\underline{b}^{(k)}$ as the convolution of the channel response vector $\underline{h}^{(k)}$ with the corresponding spreading code $\underline{c}^{(k)}$ is per Equation 1.

$$\underline{b}^{(k)} = \underline{h}^{(k)} \circ \underline{c}^{(k)}$$

$$\text{Equation 1}$$

o denotes the convolutional operator. The length of $\underline{b}^{(k)}$ is *SF* + *W*-1.

Using the symbol response vectors, the system matrix **A** is defined as per Equation 2.

$$\text{Equation 2}$$

The size of the matrix is $(N_s \cdot SF + W - 1) \times N_s \cdot K$. **A** is a block Topleitz matrix.
Block **B** is defmed as per Equation 3.

$$\mathbf{B} = \begin{bmatrix} \underline{\mathbf{b}}^{(1)} & \underline{\mathbf{b}}^{(2)} & \cdots & \underline{\mathbf{b}}^{(K)} \end{bmatrix}$$

$$\text{Equation 3}$$

The received vector sampled at the chip rate can be represented by Equation 4.

$$\underline{\mathbf{r}} = \mathbf{A} \, \underline{\mathbf{d}} + \underline{\mathbf{n}}$$

$$\text{Equation 4}$$

The size of vector $\underline{\mathbf{r}}$ is $(N_s \cdot SF + W\text{-}1)$ by 1. This size corresponds to the observation interval.
Data vector $\underline{\mathbf{d}}$ of size $N_s \cdot K$ by 1 has the form of Equation 5.

$$\underline{\mathbf{d}} = \begin{bmatrix} \underline{\mathbf{d}}_1^T & \underline{\mathbf{d}}_2^T & \cdots & \underline{\mathbf{d}}_{N_s}^T \end{bmatrix}^T$$

$$\text{Equation 5}$$

The sub-vector $\underline{\mathbf{d}}_n$ of size K by 1 is composed of the $n^{th}$ symbol of each user and is defined as Equation 6.

$$\underline{\mathbf{d}}_n = \begin{bmatrix} \underline{\mathbf{d}}_n^{(1)} & \underline{\mathbf{d}}_n^{(2)} & \cdots & \underline{\mathbf{d}}_n^{(K)} \end{bmatrix}^T, \quad n = 1, \ldots, N_s$$

$$\text{Equation 6}$$

The vector $\underline{\mathbf{n}}$ of size $(N_s \cdot SF + W\text{-}1)$ by 1 is the background noise vector and is assumed to be white.
Determining $\underline{\mathbf{d}}$ using an MMSE solution is per Equation 7.

$$\underline{d} = \mathbf{R}^{-1}\left(\mathbf{A}^H \underline{r}\right)$$

<div align="right">**Equation 7**</div>

$(\cdot)H$ represents the hermetian function (complex conjugate transpose). The covariance matrix of the system matrix **R** for a preferred MMSE solution is per Equation 8.

$$\mathbf{R} = \mathbf{A}^H \mathbf{A} + \sigma^2 \mathbf{I}$$

<div align="right">**Equation 8**</div>

$\sigma^2$ is the noise variance, typically obtained from the channel estimation device 44, and **I** is the identity matrix.

Using block circulant approximation and block DFT using PFA-FFTs, $\underline{d}$ in Equation 7 can be determined per Equation 9.

$$\underline{d} = F\left(\mathbf{R}^{-1}\right)F\left(\mathbf{A}^H \underline{r}\right)$$
$$= F^{-1}\left(\Lambda^{-1}\Lambda_{\mathbf{A}} F\left(\underline{r}_c\right)\right)$$

<div align="right">**Equation 9**</div>

$F(\cdot)$ and $F^{-1}(\cdot)$ indicate the block-DFT function and the inverse block-DFT, respectively. The derivation of the block diagonal matrices $\Lambda$ and $\Lambda_{\mathrm{A}}$ is described subsequently. Instead of directly solving Equation 9, Equation 9 can be solved using the LU decomposition and the forward and backward substitution of the main diagonal block of $\Lambda$. Alternately, Equation 9 can be solved using Cholesky decomposition.

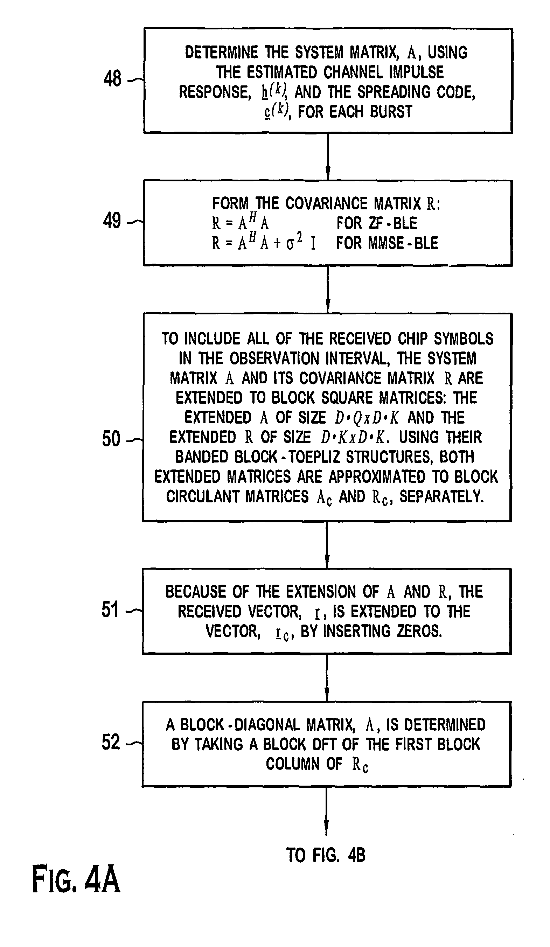

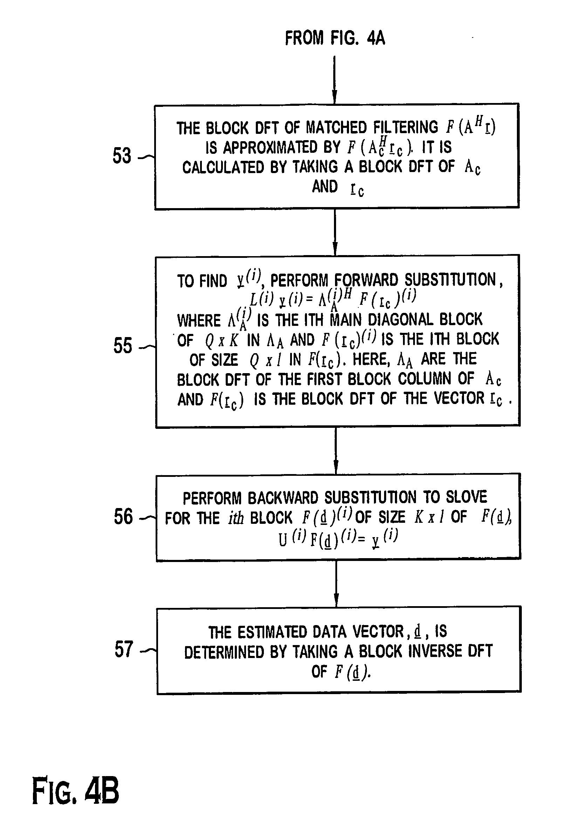

Figure 4 is a flowchart for a preferred method of determining the data vector $\underline{d}$ using fast joint detection. The system matrix **A** is determined using the estimated channel response vector $\underline{h}^{(k)}$ and the spreading code $\underline{c}^{(k)}$ for each burst, 48. **R,** the covariance matrix of the system matrix, is formed, 49. The system matrix **A** and its covariance matrix **R** are extended block square matrices. The extended **A** is of size $D \cdot Q$ by $D \cdot K$ and the extended **R** is of size $D \cdot K$ by $D \cdot K$, respectively. $D$ is chosen as per Equation 10.

$$D \geq \left\lceil N_s + \frac{W-1}{Q} \right\rceil$$

<div align="right">**Equation 10**</div>

Both extended matrices are approximated to block circulant matrices, $\mathbf{A}_c$ and $\mathbf{R}_c$, 50. Because of the extension of **A** and **R,** the received vector, $\underline{r}$, is extended to the vector $\underline{r}_c$ of size $D \cdot SF$ x 1 by inserting zeros, 51. The block-diagonal matrix, $\Lambda$, is determined by taking a block DFT using PFA-FFT of the first block column of $\mathbf{R}_c$, 52.

The block DFT of matched filtering $F(\mathbf{A}^H \underline{r})$ is approximated by $F\left(\mathbf{A}_c^H \underline{r}_c\right)$. It is calculated by taking a block DFT using PFA-FFT of $\mathbf{A}_c$ and $\underline{r}_c$, 53. Due to the block-diagonal structure ofA and $\Lambda_{\mathrm{A}}$, the blocks $F(\underline{d})^{(i)}$, $i = 1, ..., D$, are of size $K$ by 1 in $F(\underline{d})$. They are determined by performing on the main diagonal blocks, $\Lambda^{(i)}$ of $\Lambda$, LU decomposition, $\Lambda^{(i)}$ = $\mathbf{L}^{(i)}\mathbf{U}^{(i)}$, forward substitution, $\mathbf{L}^{(i)}\underline{y}^{(i)} = \Lambda_{\mathbf{A}}^{(i)H} F(\underline{r}_c)^{(i)}$, 55, and backward substitution, $\mathbf{U}^{(i)}[F(\underline{d})]^{(i)} = \underline{y}^{(i)}$, 56. $\mathbf{L}^{(i)}$ is a lower triangular matrix. $\mathbf{U}^{(i)}$ is a an upper triangular matrix. $\Lambda_{\mathbf{A}}^{(i)}$ is the $i^{th}$ main diagonal block of size $SF$ by $K$ in $\Lambda_{\mathrm{A}}$

and $F(\underline{r}_c)^{(i)}$ is the $i^{th}$ block of size $Q \times 1$ in $F(\underline{r}_c)$. $\Lambda_A$ is the block DFT using PFA-FFT of the first column of $\mathbf{A}_c$ and $F(\underline{r}_c)$ is the block DFT using PFA-FFT of the vector, $\underline{r}_c$. The estimated data vector, $\underline{d}$, is determined by a inverse block-DFT of $F(\underline{d})$, 57.

Although Equation 9 is a MMSE based solution, fast joint detection can be applied to other approaches, such as a zero forcing approach as per Equation 11.

$$\mathbf{R}\underline{d} = \left(\mathbf{A}^H \mathbf{A}\right)\underline{d} = \mathbf{A}^H \underline{r}$$

<div align="right">Equation 11</div>

As shown in Equation 11, in the zero forcing solution, the $\sigma^2 I$ term is deleted from Equation 8. The following is a derivation for the MMSE solution, although an analogous derivation can be used for a zero forcing solution.

To reduce the complexity in determining $F(\mathbf{A}^H \underline{r})$, a block DFT using PFA-FFT approach taking advantage of the block-Toeplitz structure of $\mathbf{A}$ may be used as shown in Equation 2. First, by repeating $\mathbf{B}$, we extend $\mathbf{A}$ to a block-square matrix of size $D \cdot Q \times D \cdot K$, to use all of the chip symbols in the observation interval. The extended $\mathbf{A}$ is composed of $D^2$ blocks of size $Q \times K$. The extended $\mathbf{A}$ is approximated to the block-circulant matrix $\mathbf{A}_c$.

$\mathbf{A}_c$ can be decomposed into three matrices per Equation 12.

$$\mathbf{A}_c = \mathbf{F}_{(Q)}^H \Lambda_A \mathbf{F}_{(K)}$$

<div align="right">Equation 12</div>

$\mathbf{F}_{(n)} = \mathbf{F} \otimes \mathbf{I}_n$ is a block DFT using PFA-FFT matrix of size $D \cdot n$ by $D \cdot n$. $\otimes$ denotes a kronecker product. $\mathbf{I}_n$ is an identity matrix of size $n \times n$ and $\mathbf{F}$ is a DFT matrix of size $D \times D$, whose elements $f_{il}$, $i$ and $l = 1,2,...,D$ are per Equation 13.

$$f_{il} = \frac{1}{\sqrt{D}} \exp\left(-j\frac{2\pi il}{D}\right)$$

<div align="right">Equation 13</div>

$D$ is the length of the DFT and $\mathbf{F}^H \mathbf{F} = \mathbf{I}$. $\mathbf{I}$ is an identity matrix of size $D \times D$.

The block diagonal matrix $\Lambda_A$ is of size $D \cdot Q \times D \cdot K$ and has the form per Equation 14.

$$\Lambda_A = \begin{bmatrix} \Lambda_A^{(1)} & 0 & \cdots & 0 \\ 0 & \Lambda_A^{(2)} & \cdots & 0 \\ \vdots & \vdots & \ddots & \vdots \\ 0 & 0 & \cdots & \Lambda_A^{(D)} \end{bmatrix}$$

<div align="right">Equation 14</div>

Each of its entries $\Lambda_A^{(i)}$, $i = 1, 2, ..., D$, is a $Q$ by $K$ block per Equation 15.

$$\Lambda_A^{(i)} = \begin{bmatrix} \lambda_{1,1}^{(A,i)} & \cdots & \cdots & \lambda_{1,K}^{(A,i)} \\ \vdots & \ddots & & \vdots \\ \vdots & & \ddots & \vdots \\ \lambda_{Q,1}^{(A,i)} & \cdots & \cdots & \lambda_{Q,K}^{(A,i)} \end{bmatrix}$$

**Equation 15**

Alternatively, the main diagonal blocks, $\Lambda_A^{(i)}$, $i$=1, 2, ..., $D$, can be computed by, per Equation 16.

$$\begin{bmatrix} \Lambda_A^{(1)T} & \Lambda_A^{(2)T} & \cdots & \Lambda_A^{(D)T} \end{bmatrix}^T = \left( \mathbf{F}_{(Q)} \, \mathbf{A}_c(:,1:K) \right)$$

**Equation 16**

$\mathbf{A}_c$ (:, 1: $K$) denotes the first block column of $\mathbf{A}_c$. Namely, the first K columns of $\mathbf{A}_c$. $\mathbf{F}_{(SF)} \, \mathbf{A}_c$ ( : , 1: $K$) can be calculated by $Q \cdot K$ parallel non-block DFTs of length D, using PFA-FFTs.

Due to the extention of **A**, the received vector $\underline{r}$ is also extended by inserting zeros, becoming vector rc of size $D \cdot Q$ by 1.

Using the above, $F(\mathbf{A}^H \underline{r})$ is approximated to $F\left( \mathbf{A}_c^H \underline{r}_c \right)$. It can be written as Equation 17.

$$F\left( \mathbf{A}_c^H \underline{r}_c \right) = \mathbf{F}_{(K)}^H \Lambda_A^H \mathbf{F}_{(Q)} \underline{r}_c$$

**Equation 17**

The covariance matrix **R** of size $N_s \cdot K \times N_s \cdot K$ has the block-square matrix form shown in Equation 18.

$$\mathbf{R} = \begin{bmatrix} \mathbf{R}_0 & \mathbf{R}_1^H & \cdots & \mathbf{R}_L^H & \cdots & \cdots & \cdots & \cdots & \mathbf{0} & \cdots & \mathbf{0} & \mathbf{0} \\ \mathbf{R}_1 & \mathbf{R}_0 & \ddots & \ddots & \ddots & \ddots & \ddots & \ddots & \ddots & \ddots & \vdots & \vdots \\ \vdots & \mathbf{R}_1 & \ddots & \ddots & \ddots & \ddots & \ddots & \ddots & \ddots & \ddots & \vdots & \vdots \\ \vdots & \vdots & \ddots & \ddots & \ddots & \ddots & \ddots & \ddots & \ddots & \ddots & \vdots & \vdots \\ \mathbf{R}_L & \vdots & \ddots & \ddots & \ddots & \ddots & \ddots & \ddots & \ddots & \ddots & \vdots & \vdots \\ \mathbf{0} & \mathbf{R}_L & \ddots & \ddots & \ddots & \ddots & \ddots & \ddots & \ddots & \ddots & \vdots & \vdots \\ \vdots & \mathbf{0} & \ddots & \mathbf{R}_L & \ddots & \ddots & \ddots & \ddots & \ddots & \ddots & \vdots & \vdots \\ \vdots & \vdots & \ddots & \ddots & \ddots & \ddots & \ddots & \ddots & \ddots & \mathbf{0} & \vdots \\ \vdots & \vdots & \ddots & \ddots & \ddots & \ddots & \ddots & \ddots & \ddots & \mathbf{R}_L^H & \mathbf{0} \\ \vdots & \vdots & \ddots & \ddots & \ddots & \ddots & \ddots & \ddots & \ddots & \vdots & \mathbf{R}_L^H \\ \vdots & \vdots & \ddots & \ddots & \ddots & \ddots & \ddots & \ddots & \ddots & \vdots & \vdots \\ \mathbf{0} & \mathbf{0} & \cdots & \cdots & \cdots & \cdots & \cdots & \cdots & \mathbf{R}_L & \cdots & \mathbf{R}_1 & \mathbf{R}_0 \end{bmatrix} \qquad \text{Equation 18}$$

$L$ is defined per Equation 19.

$$L = \left\lceil \frac{Q + W - 1}{Q} \right\rceil$$

Equation 19

Each entry, $\mathbf{R}_i$, in the $\mathbf{R}$ matrix is a $K$ by $K$ block and $\mathbf{0}$ is a $K$ by $K$ zero matrix. Due to the size of the extended $\mathbf{A}$, the matrix $\mathbf{R}$ is also extended to size $D \cdot K$ by $D \cdot K$ by inserting zeros.

The extended $\mathbf{R}$ is approximated to a block-circulant matrix, $\mathbf{R}_c$, of size $D \cdot K$ by $D \cdot K$ per Equation 20.

$$\mathbf{R}_c = \begin{bmatrix} \mathbf{R}_0 & \mathbf{R}_1^H & \cdots & \mathbf{R}_L^H & \cdots & \cdots & \cdots & \cdots & \mathbf{0} & \cdots & \mathbf{R}_2 & \mathbf{R}_1 \\ \mathbf{R}_1 & \mathbf{R}_0 & \ddots & \ddots & \ddots & \ddots & \ddots & \ddots & \ddots & \ddots & \vdots & \vdots \\ \vdots & \mathbf{R}_1 & \ddots & \ddots & \ddots & \ddots & \ddots & \ddots & \ddots & \ddots & \mathbf{R}_L & \vdots \\ \vdots & \vdots & \ddots & \ddots & \ddots & \ddots & \ddots & \ddots & \ddots & \ddots & \vdots & \mathbf{R}_L \\ \mathbf{R}_L & \vdots & \ddots & \ddots & \ddots & \ddots & \ddots & \ddots & \ddots & \ddots & \vdots & \vdots \\ \mathbf{0} & \mathbf{R}_L & \ddots & \ddots & \ddots & \ddots & \ddots & \ddots & \ddots & \ddots & \vdots & \vdots \\ \vdots & \mathbf{0} & \ddots & \mathbf{R}_L & \ddots & \ddots & \ddots & \ddots & \ddots & \ddots & \vdots & \vdots \\ \vdots & \vdots & \ddots & \ddots & \ddots & \ddots & \ddots & \ddots & \ddots & \mathbf{0} & \vdots \\ \mathbf{R}_L^H & \vdots & \ddots & \ddots & \ddots & \ddots & \ddots & \ddots & \ddots & \mathbf{R}_L^H & \mathbf{0} \\ \vdots & \mathbf{R}_L^H & \ddots & \ddots & \ddots & \ddots & \ddots & \ddots & \ddots & \vdots & \mathbf{R}_L^H \\ \vdots & \vdots & \ddots & \ddots & \ddots & \ddots & \ddots & \ddots & \ddots & \vdots & \vdots \\ \mathbf{R}_1^H & \mathbf{R}_2^H & \cdots & \cdots & \cdots & \cdots & \cdots & \cdots & \mathbf{R}_L & \cdots & \mathbf{R}_1 & \mathbf{R}_0 \end{bmatrix}$$

Equation 20

The block circulant matrix $\mathbf{R}_c$, is decomposed into three matrices per Equation 21.

$$\mathbf{R}_c = \mathbf{F}^H_{(K)} \mathbf{\Lambda} \mathbf{F}_{(K)}$$

<div align="right">Equation 21</div>

$\mathbf{F}_{(K)} = \mathbf{F} \otimes \mathbf{I}_K$ is a block DFT using PFA-FFT matrix of size $D \cdot K \times D \cdot K$. $\otimes$ denotes a Kronecker product. $\mathbf{I}_K$ is an identity matrix of size $K \times K$ and $\mathbf{F}$ is a DFT matrix of size $D \times D$ as described in Equation 13.

The block diagonal matrix $\Lambda$ of size $D \cdot K$ by $D \cdot K$ has the form per Equation 22.

$$\mathbf{\Lambda} = \begin{bmatrix} \mathbf{\Lambda}^{(1)} & \mathbf{0} & \cdots & \mathbf{0} \\ \mathbf{0} & \mathbf{\Lambda}^{(2)} & \cdots & \mathbf{0} \\ \vdots & \vdots & \ddots & \vdots \\ \mathbf{0} & \mathbf{0} & \cdots & \mathbf{\Lambda}^{(D)} \end{bmatrix}$$

<div align="right">Equation 22</div>

Each of its entries, $\Lambda^{(i)}$, $i = 1, 2, ..., D$, is a $K$ by $K$ block, per Equation 23A.

$$\mathbf{\Lambda}^{(i)} = \begin{bmatrix} \lambda^{(i)}_{1,1} & \cdots & \cdots & \lambda^{(i)}_{1,K} \\ \vdots & \ddots & & \vdots \\ \vdots & & \ddots & \vdots \\ \lambda^{(i)}_{K,1} & \cdots & \cdots & \lambda^{(i)}_{K,K} \end{bmatrix}$$

<div align="right">Equation 23A</div>

Alternatively, the main diagonal blocks, $\Lambda^{(i)}$, $i = 1, 2, ..., D$, can be computed per Equation 23B.

$$\begin{bmatrix} \mathbf{\Lambda}^{(1)T} & \mathbf{\Lambda}^{(2)T} & \cdots & \mathbf{\Lambda}^{(D)T} \end{bmatrix} = \left( \mathbf{F}_{(K)} \, \mathbf{R}_c(:, 1:K) \right),$$

<div align="right">Equation 23B</div>

$\mathbf{R}_c(:, 1:K)$ denotes the first block column of $\mathbf{R}_c$. Namely, the first $K$ columns of $\mathbf{R}_c$. $\mathbf{F}_{(K)} \mathbf{R}_c(:, 1:K)$ can be calculated by $K^2$ parallel non-block DFTs of length $D$, using PFA_FFTs.

The estimated data vector, $\underline{d}$, in Equation 7 is preferably approximated per Equation 24A.

$$\begin{aligned} \underline{d} &= \mathbf{R}^{-1} \mathbf{A}^H \underline{r} \\ &\approx \mathbf{R}_c^{-1} \mathbf{A}_c^H \underline{r}_c \\ &= \mathbf{F}^H_{(K)} \mathbf{\Lambda}^{-1} \mathbf{\Lambda}^H_{\mathbf{A}} \mathbf{F}_{(Q)} \underline{r}_c \end{aligned}$$

<div align="right">Equation 24A</div>

The block diagonal matrix $\Lambda^{-1}$ is per Equation 24B.

$$\Lambda^{-1} = \begin{bmatrix} \Lambda^{(1)-1} & 0 & \cdots & 0 \\ 0 & \Lambda^{(2)-1} & \cdots & 0 \\ \vdots & \vdots & \ddots & \vdots \\ 0 & 0 & \cdots & \Lambda^{(D)-1} \end{bmatrix}$$

<div align="center">

**Equation 24B**

</div>

The inversion of A requires an inversion of K x K matrices, $\Lambda^{(i)}$, $i$ = 1, 2, ..., $D$.

Equation 24A can be rewritten as Equation 25.

$$F(\underline{d}) = \Lambda^{-1} \Lambda_A^H F(\underline{r}_c)$$

<div align="right">

**Equation 25**

</div>

$F(\underline{r}_c)$ is per Equations 26A and 26B.

$$F(\underline{r}_c) \equiv \mathbf{F}_{(Q)} \underline{r}_c$$

<div align="right">

**Equation 26A**

</div>

$$F(\underline{d}_c) \equiv \mathbf{F}_{(K)} \underline{r}_c$$

<div align="right">

**Equation 26B**

</div>

Due to the block-diagonal structure of $\Lambda^{-1}$ and $\Lambda_A^H$, Equation 25 can be efficiently calculated as follows. The terms of Equation 25 are partitioned into $D$ blocks, as per Equation 27.

$$\begin{bmatrix} F(\underline{d})^{(1)} \\ F(\underline{d})^{(2)} \\ \vdots \\ F(\underline{d})^{(D)} \end{bmatrix} \approx \begin{bmatrix} \Lambda^{(1)-1} & & & \\ & \Lambda^{(2)-1} & & \\ & & \ddots & \\ & & & \Lambda^{(D)-1} \end{bmatrix} \begin{bmatrix} \Lambda_A^{(1)} & & & \\ & \Lambda_A^{(2)} & & \\ & & \ddots & \\ & & & \Lambda_A^{(D)} \end{bmatrix}^H \begin{bmatrix} F(\underline{r}_c)^{(1)} \\ F(\underline{r}_c)^{(2)} \\ \vdots \\ F(\underline{r}_c)^{(D)} \end{bmatrix}$$

<div align="right">

**Equation 27**

</div>

Each block in Equation 27 is solved separately, per Equation 28.

$$F(\underline{d})^{(i)} = \Lambda^{(i)-1} \Lambda_A^H F(\underline{r}_c)^{(i)}$$

<div align="right">

**Equation 28**

</div>

$F(\underline{d})^{(i)}$ is a *K* by 1 vector. $\Lambda^{(i)}$ is a *K* by *K* matrix, per Equation 22.  $\Lambda_A^{(i)}$ is an *Q* by *K* matrix, per Equation 14.

$F(\underline{r}_c)^{(i)}$ is an *Q* by 1 vector and is composed of elements $(1+(i-1)Q)$ through $(i \cdot Q)$ of $F(\underline{r}_c)$.

To avoid the direct inversion of $\Lambda^{(i)}$, Equation 28 can be solved by using *LU* decomposition and forward and backward substitution. Equation 28 is rewritten per Equation 29.

$$\Lambda^{(i)} \, F(\underline{d})^{(i)} = \Lambda_A^{(i)H} \, F\!\left(\underline{r}_c\right)^{(i)}$$

$$\text{Equation 29}$$

$\Lambda^{(i)}$ is decomposed per Equation 30.

$$\Lambda^{(i)} = \mathbf{L}^{(i)} \, \mathbf{U}^{(i)}$$

$$\text{Equation 30}$$

$\mathbf{L}^{(i)}$ is a lower triangular matrix and $\mathbf{U}^{(i)}$ is an upper triangular matrix.

Using *LU* decomposition, Equation 28 is represented as, per Equation 31.

$$\mathbf{L}^{(i)}\mathbf{U}^{(i)} \, F(\underline{d})^{(i)} = \Lambda_A^{(i)H} \, F(\underline{r})^{(i)}$$

$$\text{Equation 31}$$

$F(\underline{d})^{(i)}$ in Equation 31 is solved by forward substitution, per Equation 32, and backward substitution, per Equation 33.

$$\text{Forward Substitution: } \mathbf{L}^{(i)}\underline{y}^{(i)} = \Lambda_A^{(i)H} F(\underline{r})^{(i)}$$

$$\text{Equation 32}$$

$$\text{Backward Substitution: } \mathbf{U}^{(i)}\left[F(\underline{d})\right]^{(i)} = \underline{y}^{(i)}$$

$$\text{Equation 33}$$

Finally, **d** is determined for all blocks as per Equation 34.

$$\underline{d} = F^{-1}(\underline{d}) = F^{-1}\left(\begin{bmatrix} F(\underline{d})^{(1)} \\ F(\underline{d})^{(2)} \\ \vdots \\ F(\underline{d})^{(D)} \end{bmatrix}\right)$$

$$\text{Equation 34}$$

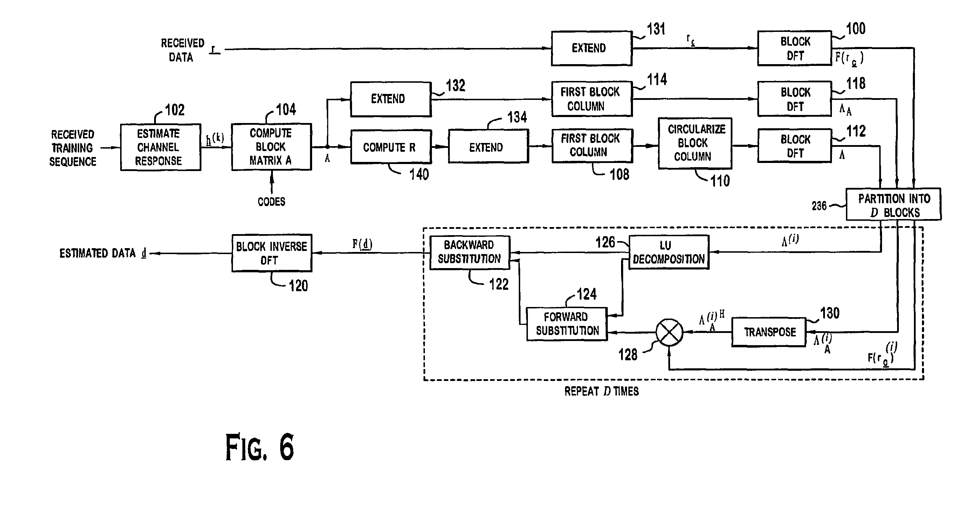

Figure 6 is a block diagram of a preferred implementation of efficient joint detection in a TDD/CDMA system.

Using the received vector, $\underline{r}$, $\underline{r}_c$ is formed by inserting zeros, then a block DFT 100 of $\underline{r}_c$ is performed per Equation 26, to produce $F(\underline{r}_c)$.

Using the received training sequences, the channel impulse responses for each transmitted burst, $\underline{h}^{(k)}$, is determined by an estimate channel response block 102. Using each channelization code, $\underline{c}^{(k)}$ and the channel impulse response, $\underline{h}^{(k)}$, the system matrix, $\mathbf{A}$, is determined by compute block matrix $\mathbf{A}$ block 104 per Equation 2.

To determine $\Lambda_\mathbf{A}$, the system matrix $\mathbf{A}$ is extended by extend block 132, to use all received chips in the observation interval. The first block column of the block-circulant matrix $\mathbf{A}_c$ is determined by selecting the first $K$ columns of the extended $\mathbf{A}$ matrix by first block column block 114. By taking a block DFT using PFA-FFT 118 using PFA-FFT, $\Lambda_\mathbf{A}$ is determined.

To determine $\Lambda$ , $\mathbf{R}$ is first determined by compute $\mathbf{R}$ block 140. For an MMSE solution, $\mathbf{R} = \mathbf{A}^H\mathbf{A} + \sigma^2 \mathbf{I}$ is used; for a zero forcing solution, $\mathbf{R} = \mathbf{A}^H \mathbf{A}$ is used. Due to the size of the extended $\mathbf{A}$, $\mathbf{R}$ is also extended by extend block 134.The first block column of the extended $\mathbf{R}$ matrix is determined by selecting the first K columns of the extended $\mathbf{R}$ matrix by first block column block 108. The first block column of the extended $\mathbf{R}$ matrix is circularized by a circularize block column block 110. It becomes the first block column of a block-circulant $\mathbf{R}_c$. By taking a block DFT using PFA-FFT by block DFT block 112, $\Lambda$ is determined.

To efficiently compute the estimated data vector $\underline{d}$, $\Lambda_\mathbf{A}$, $\Lambda$, and $F(\underline{rc})$ are divided into blocks $\mathbf{\Lambda}_\mathbf{A}^{(i)}$, $\Lambda^{(i)}$, and $F(\underline{r}_c)^{(i)}$, $i = 1,2, ..., D$, respectively, exploiting the block-diagonal structures of $\Lambda_\mathbf{A}$ and $\Lambda$, by partition block 136. The complex conjugate transpose of $\mathbf{\Lambda}_\mathbf{A}^{(i)}$, $\mathbf{\Lambda}_\mathbf{A}^{(i)H}$, is determined by a transpose block 130. A multiplier 128 multiplies $\mathbf{\Lambda}_\mathbf{A}^{(i)H}$ by $F(\underline{r}_c)^{(i)}$. $\Lambda^{(i)}$ is decomposed using $LU$ decomposition by a $LU$ decomposition block 126, per Equation 30. By performing forward and backward substitution, per Equations 31-33, using forward and backward substitution blocks 124 and 122, respectively, $F(\underline{d})^{(i)}$ is determined. By repeating the $LU$ decomposition and forward and backward substitution $D$ times, $F(\underline{d})$ is found. Taking a inverse block DFT using PFA-FFT of $F(\underline{d})$ by block inverse DFT block 120, $\underline{d}$ is estimated.

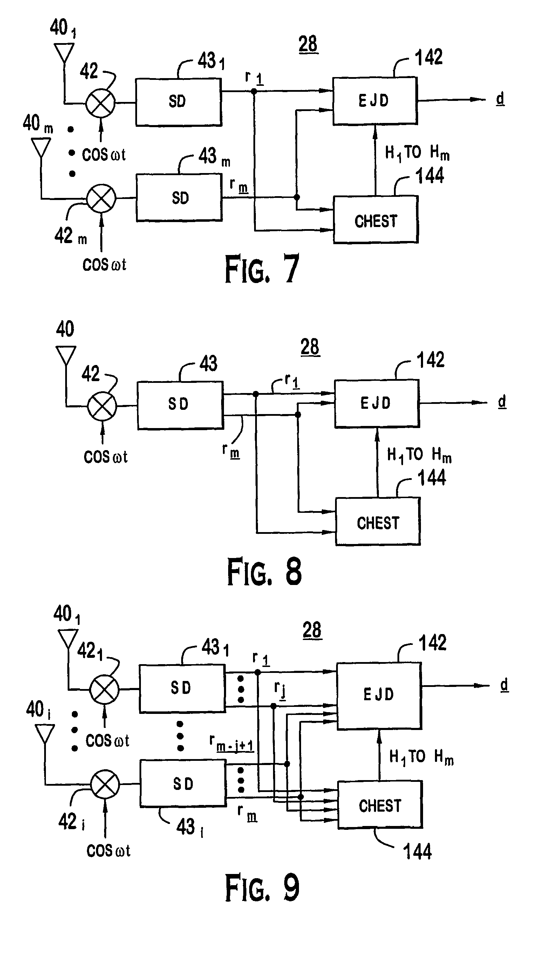

Figures 7, 8 and 9 are simplified diagrams of receivers applying efficient joint detection to multiple reception antennas and/or fractional (multiple chip rate) sampling. A receiver 28 with multiple reception antennas is shown in Figure 7. Transmitted bursts are received by each antenna $40_1$ to $40_m$ (40). Each antennas' version of the received bursts are reduced to baseband, such as by demodulators $42_1$ to $42_m$. The baseband signals for each antenna are sampled by sampling devices $43_1$ to $43_m$ to produce a received vector, $\underline{r}_1$ to $\underline{r}_m$, for each antenna 40. The samples corresponding to the midamble are processed by a channel estimation device 144 to produce channel response matrices, $H_1$ to $H_m$, for each antenna 40. The received data vector, $\underline{d}$, is determined by an efficient joint detection device 142 using the received vectors and the channel response matrices.

A receiver 28 sampling using fraction sampling is shown in Figure 8. Transmitted bursts are received by the antenna 40. The received bursts are reduced to baseband, such as by a demodulator 42. The baseband signal is sampled by a sampling device 43 to produce factional samples as received vectors, $\underline{r}_1$ to $\underline{r}_m$. Each received vector represents chip rate samples sampled at a fraction of a chip offset. To illustrate, for twice the chip rate sampling, two received vectors $\underline{r}_1$ and $\underline{r}_2$ are produced. Each of those vectors has samples spaced by half a chip in time. Samples corresponding to the midamble are processed by a channel estimation device 144 to produce channel response matices, $H_1$ to $H_m$, for each set of fractional samples. The received data vector, $\underline{d}$, is determined by an efficient joint detection device 142 using the received vectors and the channel response matrices.

A receiver 28 with multiple reception antennas and using fractional sampling is shown in Figure 9. Transmitted bursts are received by each antenna $40_1$ to $40_i$ (40). Each antennas' version of the received bursts are reduced to baseband, such as by demodulators $42_1$ to $42_i$. The baseband signals for each antenna are sampled by sampling devices $43_1$ to 43j to produce a received vectors, $\underline{r}_1$ to $\underline{r}_m$. The received vectors for each antenna correspond to each multiple of the chip rate samples. The samples corresponding to the midamble are processed by a channel estimation device 144 to produce channel response matices, $H_1$ to $H_m$, for each antenna's fractional samples. The received data vector, $\underline{d}$, is determined by an efficient joint detection device 142 using the received vectors and the channel response matrices.

In applying efficient joint detection to either receive diversity, fractional sampling or both, the received communication bursts are viewed as $M$ virtual chip rate received bursts. To illustrate, for twice the chip rate sampling and two antenna receive diversity, the received bursts are modeled as four ($M$=4) virtual chip rate received bursts.

Each received burst is a combination of $K$ transmitted bursts. Each of the $K$ transmitted bursts has its own code. The channel impulse response vector of the $k^{th}$ out of $K$ codes and the $m^{th}$ out of the $M$ virtual received bursts is $\underline{h}^{(k,m)}$. $\underline{h}^{(k,m)}$ has a length $W$ and is estimated from the midamble samples of the burst of the $k^{th}$ code of the $m^{th}$ virtual received burst.

Each of the $N$ data symbols of the burst of the $k^{th}$ code is per Equation 35.

$$\underline{d}^{(k)} = \begin{bmatrix} d_1^{(k)} & d_2^{(k)} & \cdots & d_N^{(k)} \end{bmatrix}^T, \qquad 1 \le k \le K$$

<div align="right">**Equation 35**</div>

The code of the $k^{th}$ burst is per Equation 36.

$$\underline{c}^{(k)} = \begin{bmatrix} c_1^{(k)} & c_2^{(k)} & \cdots & c_Q^{(k)} \end{bmatrix}^T, \qquad 1 \le k \le K$$

<div align="right">**Equation 36**</div>

The symbol response of the $k^{th}$ code's contribution to the $m^{th}$ virtual burst, $\underline{b}^{(k,m)}$ is per Equation 37.

$$\underline{b}^{(k,m)} = \underline{h}^{(k,m)} \otimes \underline{c}^{(k)}$$

<div align="right">**Equation 37**</div>

The length of the symbol response is $Q+W$-1. $Q$ is the spreading factor. The system matrix, $A^{(m)}$, for each $m^{th}$ received burst is per Equation 38.

<div align="right">**Equation 38**</div>

Each block $\mathbf{B}^{(m)}$ is of size $(Q+W$-1) by $K$ and is per Equation 39.

$$\mathbf{B}^{(m)} = \begin{bmatrix} \underline{b}^{(1,m)} & \underline{b}^{(2,m)} & \cdots & \underline{b}^{(K,m)} \end{bmatrix}$$

<div align="right">**Equation 39**</div>

The overall system matrix $\mathbf{A}$ is per Equation 40.

$$\mathbf{A} = \begin{bmatrix} \mathbf{A}^{(1)} \\ \mathbf{A}^{(2)} \\ \vdots \\ \mathbf{A}^{(M)} \end{bmatrix}$$

Equation 40

As shown in Equation 38, each sub-system matrix $\mathbf{A}^{(m)}$ is block Toeplitz. The overall received vector of the $M$ virtual bursts is of size $M(NQ+W$-1) and is per Equation 41.

$$\underline{\mathbf{r}} = \begin{bmatrix} \underline{\mathbf{r}}_1^T & \underline{\mathbf{r}}_2^T & \cdots & \underline{\mathbf{r}}_M^T \end{bmatrix}^T$$

Equation 41

The $m^{\text{th}}$ received vector $\underline{\mathbf{r}}_m$ is of size $NQ+W$-1 by 1.
Equation 42 is a model for the overall received vector.

$$\underline{\mathbf{r}} = \mathbf{A}\,\underline{\mathbf{d}} + \underline{\mathbf{n}}$$

Equation 42

$\underline{\mathbf{n}}$ is the noise variance.
Each $m^{th}$ received virtual burst is per Equation 43.

$$\underline{\mathbf{r}}_m = \mathbf{A}^{(m)}\mathbf{d} + \underline{\mathbf{n}}_m$$

Equation 43

$\underline{\mathbf{n}}_m$ is the noise variance for the $m^{th}$ received virtual burst.
To solve for the data vector $\underline{\mathbf{d}}$ in Equation 42, a block linear equalizer with either a zero forcing or minimum mean square error (MMSE) approach may be used per Equation 44.

$$\hat{\underline{\mathbf{d}}} = \mathbf{R}^{-1}\,\mathbf{A}^H\,\underline{\mathbf{r}}$$

Equation 44

$\mathbf{R}$ is the covariance matrix.
For a zero forcing solution, R is per Equation 45.

$$\mathbf{R} = \sum_{m=1}^{M} \mathbf{A}^{(m)H}\mathbf{A}^{(m)} = \mathbf{A}^H\mathbf{A}$$

Equation 45

For a MMSE solution, $\mathbf{R}$ is per Equation 46.

$$R = \sum_{m=1}^{M} A^{(m)H} A^{(m)} + \sigma^2 I = A^H A + \sigma^2 I$$

<div align="right">Equation 46</div>

The covariance matrix for either the zero forcing or MMSE solution is a block Toeplitz. To apply a discrete Fourier transform to the block-Toeplitz $A^{(m)}$ matix, a block-circulant approximation of $A^{(m)}$, $A_c^{(m)}$ is used. To make $A^{(m)}$ a block-square matrix, $A^{(m)}$ is extended. The extended $A^{(m)}$ matrix is then approximated to a block circulant matrix $A_c^{(m)}$.

The $A_c^{(m)}$ matrix is composed of $D$ by $D$ blocks. Each block is of size $Q$ by $K$. Accordingly, the size of $A_c^{(m)}$ becomes $DQ$ by $DK$. To include all the elements of $A^{(m)}$, $D$ is chosen to be an integer larger than $D_{min}$ as determined per Equation 47.

$$D_{\min} = \left\lceil N + \frac{(W-1)}{Q} \right\rceil$$

<div align="right">Equation 47</div>

[·] represents a round up to an integer function.

The covariance matrix $R$ is a block-square matrix of size $NK$ by $NK$ with blocks of size $K$ by $K$. For $R$ to be compatible with the extended $A_c^{(m)}$ matrix, $R$ is extended to the size $DK$ by $DK$ by zero-padding and approximating the extended $R$ to a block circulant covariance matrix $R_c$. For the received vector, $r^{(m)}$, to be compatible with $A_c^{(m)}$ and $R_c$, $\underline{r}^{(m)}$ is extended to a $DQ$ by 1 vector, $\underline{r}_c^{(m)}$ by zero padding.

After extending the received vectors, $\underline{r}^{(m)}$, the over all received vector is per Equation 48.

$$\underline{r}_c = \begin{bmatrix} \underline{r}_c^{(1)T} & \underline{r}_c^{(2)T} & \cdots & \underline{r}_c^{(M)T} \end{bmatrix}^T$$

Equation 48

Each block-circulant matrix $A_c^{(m)}$ is diagonalized to a block-diagonal matrix by block discrete Fourier transform matrices per Equation 49.

$$A_c^{(m)} = F_{(Q)}^H \Lambda_A^{(m)} F_{(K)}$$

<div align="right">Equation 49</div>

$F_{(Q)}$ is per Equation 50.

$$F_{(Q)} = F \otimes I_Q$$

<div align="right">Equation 50</div>

$F_{(K)}$ is per Equation 51.

$$\mathbf{F}_{(K)} = \mathbf{F} \otimes \mathbf{I}_K$$

Equation 51

**F** is a discrete Fouriertrans form matrix of size $D$ by $D$ and is an $n$ by $n$ identity matrix. $\Lambda_A{}^{(m)}$ is a block diagonal matrix of the form of Equation 52.

$$\Lambda_A^{(m)} = \begin{bmatrix} \Lambda_A^{(1,m)} & 0 & \cdots & 0 \\ 0 & \Lambda_A^{(2,m)} & \cdots & 0 \\ \vdots & \vdots & \ddots & \vdots \\ 0 & 0 & \cdots & \Lambda_A^{(D,m)} \end{bmatrix}$$

Equation 52

$\Lambda_A{}^{(l,m)}$ for $l = 1,...,D$, and $m=1,...,M$ is a non-zero block of size $Q$ by $K$. 0 is a zero matrix of size $Q$ by $K$ having all zero elements.
$\Lambda A^{(l,m)}$ is alternately computed per Equation 53.

$$\Lambda_A^{(m)} = diag^{B}\left(\mathbf{F}_{(Q)}\, \mathbf{A}_c^{(m)}(\,:\,,1{:}K)\right)$$

Equation 53

$\mathbf{A}_c^{(m)}(\,:\,,1{:}K)$ is the first block column of $\mathbf{A}_c^{(m)}$. The first block column having $K$ columns. To determine $\Lambda_A^{(m)}$, preferably $\mathbf{F}_{(Q)}\, \mathbf{A}_c^{(m)}(\,:\,,1{:}K)$ is determined by $QK$ parallel non-block DFTs of length $D$, using PFA-FFTs. The block circulant matrix $\mathbf{R}_c$ is also preferably diagonalized to the block diagonal matrix $\Lambda_\mathbf{R}$ by a block DFT matrix $\mathbf{F}_{(K)} = \mathbf{F} \otimes \mathbf{I}_K$ as per Equation 54.

$$\mathbf{R}_c = \mathbf{F}_{(K)}^{H}\, \Lambda_\mathbf{R}\, \mathbf{F}_{(K)}$$

Equation 54

The block diagonal matrix $\Lambda_\mathbf{R}$ is composed by blocks $\Lambda_\mathbf{R}^{(l)}$, $l=1, ..., D$ of size $K$ by $K$ in its main diagonal block, per Equation 55.

$$\Lambda_\mathbf{R} = \begin{bmatrix} \Lambda_\mathbf{R}^{(1)} & 0 & \cdots & 0 \\ 0 & \Lambda_\mathbf{R}^{(2)} & \cdots & 0 \\ \vdots & \vdots & \ddots & \vdots \\ 0 & 0 & \cdots & \Lambda_\mathbf{R}^{(D)} \end{bmatrix}$$

Equation 55

Another approach to determine $\Lambda_R$ is per Equation 56.

$$\Lambda_{\mathbf{R}} = diag^B\left(\mathbf{F}_{(K)}\,\mathbf{R}_c\left(:,1{:}K\right)\right)$$

$$\text{Equation 56}$$

$\mathbf{R}_c\left(:,1{:}K\right)$ is the first block column of $\mathbf{R}_c$. $\mathbf{F}_{(K)}\,\mathbf{R}_c\left(:,1{:}K\right)$ is preferably determined using $K^2$ parallel non-block DFTs of length $D$. In one implementation, the $K^2$ parallel non-block DFTs are implemented using $K^2$ parallel non-block prime factor algorithm fast Fourier transforms (PFA-FFTs) of length $D$.

Preferably to perform the block equalization of Equation 44, the matched filtering is approximated per Equation 57.

$$\begin{aligned}
\mathbf{A}^H\,\underline{\mathbf{r}} \approx \mathbf{A}_c^H\,\underline{\mathbf{r}}_c &= \sum_{m=1}^{M}\mathbf{A}^{(m)H}\,\underline{\mathbf{r}}_c^{(m)}\\[6pt]
&= \sum_{m=1}^{M}\left(\mathbf{F}_{(Q)}^H\,\Lambda_{\mathbf{A}}^{(m)}\,\mathbf{F}_{(K)}\right)^H\underline{\mathbf{r}}_c^{(m)}\\[6pt]
&= \mathbf{F}_{(K)}^H\,\sum_{m=1}^{M}\Lambda_{\mathbf{A}}^{(m)H}\,\mathbf{F}_{(Q)}\,\underline{\mathbf{r}}_c^{(m)}
\end{aligned}$$

$$\text{Equation 57}$$

The block-diagonalization of $\mathbf{A}_c^{(m)}$ is per Equation 58.

$$\mathbf{A}_c = \begin{bmatrix}\mathbf{A}_c^{(1)T} & \mathbf{A}_c^{(2)T} & \cdots & \mathbf{A}_c^{(M)T}\end{bmatrix}^T$$

$$\text{Equation 58}$$

The estimation of the data vector, $\hat{\underline{\mathbf{d}}}$, is per Equation 59.

$$\begin{aligned}
\hat{\underline{\mathbf{d}}} = \mathbf{R}^{-1}\,\mathbf{A}^H\,\underline{\mathbf{r}} &\approx \mathbf{R}_c^{-1}\,\mathbf{A}_c^H\,\underline{\mathbf{r}}_c\\[6pt]
&= \left(\mathbf{F}_{(K)}^H\Lambda_{\mathbf{R}}\mathbf{F}_{(K)}\right)^{-1}\mathbf{F}_{(K)}^H\,\sum_{m=1}^{M}\left(\Lambda_{\mathbf{A}}^{(m)H}\,\mathbf{F}_{(Q)}\,\underline{\mathbf{r}}_c^{(m)}\right)\\[6pt]
&= \mathbf{F}_{(K)}^H\,\Lambda_{\mathbf{R}}^{-1}\,\mathbf{F}_{(K)}\,\mathbf{F}_{(K)}^H\,\sum_{m=1}^{M}\left(\Lambda_{\mathbf{A}}^{(m)H}\,\mathbf{F}_{(Q)}\,\underline{\mathbf{r}}_c^{(m)}\right)\\[6pt]
&= \mathbf{F}_{(K)}^H\,\Lambda_{\mathbf{R}}^{-1}\,\sum_{m=1}^{M}\left(\Lambda_{\mathbf{A}}^{(m)H}\,\mathbf{F}_{(Q)}\,\underline{\mathbf{r}}_c^{(m)}\right)\\[6pt]
&= \mathbf{F}_{(K)}^H\,\underline{\mathbf{y}}
\end{aligned}$$

$$\text{Equation 59}$$

The vector $\underline{\mathbf{y}}$ is of size DK by 1 and is per Equation 60.

$$\underline{y} = \Lambda_R^{-1} \sum_{m=1}^{M} \left( \Lambda_A^{(m)} F_{(Q)} \underline{r}_c^{(m)} \right)$$
$$= \left[ \underline{y}^{(1)T} \quad \underline{y}^{(2)T} \quad \cdots \quad \underline{y}^{(D)T} \right]^T$$

$$\text{Equation 60}$$

$\underline{y}^{(l)}$, $l = 1, \ldots D$ is a vector of size $K$ by 1.

Preferably to determine $\underline{y}$, $F_{(Q)} \underline{r}_c^{(m)}$ is determined using $Q$ parallel non-block DFTs of a length $D$. In one implementation, the $Q$ parallel non-block DFTs are implemented using $Q$ parallel non-block PFA-FFTs of length $D$. $\Lambda_R^{-1}$ is a block diagonal matrix having blocks of size $K$ by $K$ in the main diagonal and is per Equation 61.

$$\Lambda_R^{-1} = \begin{bmatrix} \Lambda_R^{(1)-1} & 0 & \cdots & 0 \\ 0 & \Lambda_R^{(2)-1} & \cdots & 0 \\ \vdots & \vdots & \ddots & \vdots \\ 0 & 0 & \cdots & \Lambda_R^{(D)-1} \end{bmatrix}$$

$$\text{Equation 61}$$

Each $\Lambda_R^{(l)-1}$, $l = 1, \ldots, D$, is a block of size $K$ by $K$.

Preferably using the block diagonal structure of $\Lambda_R^{-1}$, $\underline{y}^{(l)}$ is determined by the Cholesky decomposition of $\Lambda_R^{(l)}$ and forward and backward substitution in parallel. Alternately, $\Lambda_R^{(l)}$ is directly inverted.

To perform the Cholesky decomposition, a vector $\sum_{m=1}^{M} \left( \Lambda_A^{(m)H} F_{(Q)} \underline{r}_c^{(m)} \right)$ is divided into $D$ blocks of a size $K$ by 1, per Equation 62.

$$\underline{x} = \sum_{m=1}^{M} \left( \Lambda_A^{(m)H} F_{(Q)} \underline{r}_c^{(m)} \right)$$
$$= \left[ \underline{x}^{(1)T} \quad \underline{x}^{(2)T} \quad \cdots \quad \underline{x}^{(D)T} \right]^T$$

$$\text{Equation 62}$$

A Cholesky factor $\mathbf{G}^{(l)}$ of $\Lambda_R^{(l)}$ is determined using a factorization, per Equation 63.

$$\Lambda_R^{(l)} = \mathbf{G}^{(l)} \mathbf{G}^{(l)H}$$

$$\text{Equation 63}$$

Using the Cholesky factor $\mathbf{G}^{(l)}$, each $\underline{\mathbf{y}}^{(l)}$ is determined by forward and backward substitution separately per Equations 64, 65 and 66.

$$\mathbf{\Lambda}_R^{(l)}\,\underline{\mathbf{y}}^{(l)} = \mathbf{G}^{(l)}\mathbf{G}^{(l)H}\,\underline{\mathbf{y}}^{(l)} = \underline{\mathbf{x}}^{(l)}$$

$$\text{Equation 64}$$

$$\textit{Foward Substitution}: \textit{Find } \underline{\mathbf{z}}^{(l)} \textit{ in } \mathbf{G}^{(l)}\,\underline{\mathbf{z}}^{(l)} = \underline{\mathbf{x}}^{(l)}, \textit{ where } \underline{\mathbf{z}}^{(l)} = \mathbf{G}^{(l)H}\,\underline{\mathbf{y}}^{(l)}$$

$$\text{Equation 65}$$

$$\textit{Backward Substitution}: \textit{Find } \underline{\mathbf{y}}^{(l)} \textit{ in } \underline{\mathbf{z}}^{(l)} = \mathbf{G}^{(l)H}\,\underline{\mathbf{y}}^{(l)}$$

$$\text{Equation 66}$$

By performing a block inverse DFT of $\underline{\mathbf{y}}$, the data vector $\underline{\mathbf{d}}$ is estimated as $\hat{\underline{\mathbf{d}}}$. Preferably, the block inverse DFT is implemented using $K$ parallel non-block inverse PFA-FFTs of a length $D$.

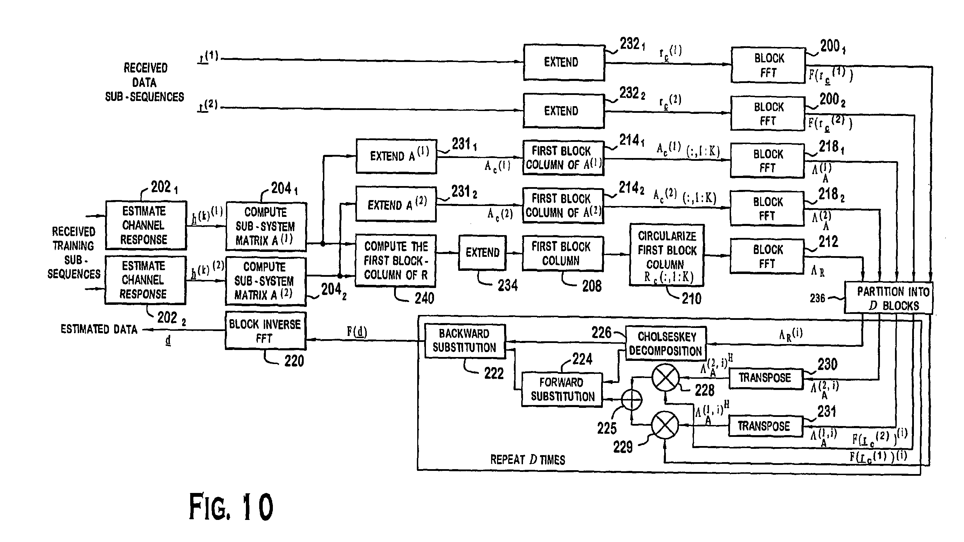

Figure 10 is a block diagram of a preferred implementation of efficient joint detection in a TDD/CDMA system. Although Figure 10 illustrates using two sets of samples, the figure can be extended to other multiple sets. Using the received vector for each set of chip rate samples, $\underline{\mathbf{r}}_1$ and $\underline{\mathbf{r}}_2$, $\underline{\mathbf{r}}_c^{(1)}$ and $\underline{\mathbf{r}}_c^{(2)}$ is formed by inserting zeros, by Extend blocks $232_1$ and $232_2$, respectively. A block DFT $200_1$ and $200_2$ using PFA-FFT of $\underline{\mathbf{r}}_c^{(1)}$ and $\underline{\mathbf{r}}_c^{(2)}$ is then performed, to produce $\mathbf{F}_{(Q)}\,\underline{\mathbf{r}}_c^{(1)}$ and $\mathbf{F}_{(Q)}\,\underline{\mathbf{r}}_c^{(2)}$.

Using the received training sequences, the channel impulse responses for each chip rate version of each transmitted burst, $\underline{\mathbf{h}}^{(k)(1)}$ and $\underline{\mathbf{h}}^{(k)(2)}$, is determined by estimate channel response blocks $202_1$ and $202_2$. Using each channelization code, $\underline{\mathbf{c}}^{(k)}$ and the channel impulse response, $\underline{\mathbf{h}}^{(k)(1)}$ and $\underline{\mathbf{h}}^{(k)(2)}$, each system matrix, $\mathbf{A}^{(1)}$ and $\mathbf{A}^{(2)}$, is determined by compute sub-system matrix blocks $204_1$ and $204_2$ per Equations 37 and 38.

To determine $\mathbf{\Lambda}_A^{(1)}$ and $\mathbf{\Lambda}_A^{(2)}$, each system matrix, $\mathbf{A}^{(1)}$ and $\mathbf{A}^{(2)}$, is extended by extend blocks $231_1$ and $231_2$. The first block column of each block-circulant matrix, $\mathbf{A}^{(1)}$ and $\mathbf{A}^{(2)}$, is determined by selecting the first K columns of the extended $\mathbf{A}^{(m)}$ matrix by first block column blocks $214_1$ and $214_2$. By taking block DFTs $218_1$ and $218_2$, $\mathbf{\Lambda}_A^{(1)}$ and $\mathbf{\Lambda}_A^{(2)}$ are determined using a PFA-FFT.

To determine $\mathbf{\Lambda}_R$, the first block column of $\mathbf{R}$ is determined by compute first block column $\mathbf{R}$ block 240. The first column of $\mathbf{R}$ is extended by extend block 234. The first block column of the extended $\mathbf{R}$ is determined by a first block column determining device 208. The first block column of the extended $\mathbf{R}$ matrix is circularized, $\mathbf{R}_c$, by a circularize block column block 210. By taking a block DFT by block DFT block 212, $\mathbf{\Lambda}_R^{(\,)}$ is determined using a PFA-FFT.

To efficiently compute the estimated data vector $\underline{\mathbf{d}}$, each of $\mathbf{\Lambda}_A^{(1)}$, $\mathbf{\Lambda}_A^{(2)}$ and $\mathbf{F}\!\left(\underline{\mathbf{r}}_c^{(1)}\right)$ and $\mathbf{F}\!\left(\underline{\mathbf{r}}_c^{(2)}\right)$ as well as $\mathbf{\Lambda}_R$ are used. Each of $\mathbf{F}\!\left(\underline{\mathbf{r}}_c^{(1)}\right)$, $\mathbf{F}\!\left(\underline{\mathbf{r}}_c^{(2)}\right)$, $\mathbf{\Lambda}_A^{(1)}$, $\mathbf{\Lambda}_A^{(2)}$ and $\mathbf{\Lambda}_R$ is divided into D blocks, by partition block 236. The complex conjugate transpose of each of $\mathbf{\Lambda}_A^{(1,i)}$ and $\mathbf{\Lambda}_A^{(2,i)}$, $\mathbf{\Lambda}_A^{(1,i)H}$ and $\mathbf{\Lambda}_A^{(2,i)H}$, where i is the ith block, is determined by transpose blocks 230, 231. A multiplier 228 multiplies $\mathbf{\Lambda}_A^{(2,i)H}$ by $\mathbf{F}_{(Q)}\!\left(\underline{\mathbf{r}}_c^{(2)}\right)^{(i)}$. A multiplier 229 multiplies $\mathbf{\Lambda}_A^{(1,i)H}$ by $\mathbf{F}_{(Q)}\!\left(\underline{\mathbf{r}}_c^{(1)}\right)^{(i)}$. A summer 225 sums the multiplied results per Equation 62. $\mathbf{\Lambda}_R^{(i)}$ is decomposed using Cholesky decomposition 226, per Equation 63. By performing forward and backward substitution, per Equations 65 and 66, using forward and backward substitution blocks 224 and 222, respectively, $F(\underline{d})$ is determined. Taking an inverse block DFT using PFA-FFT of $F(\underline{d})$ by block inverse DFT block 220 using a PFA-FFT, $\underline{d}$ is estimated.

**Claims**

1. A method for detecting data from K data signals transmitted over a shared spectrum in a code division multiple access format wherein:

   a combined signal over the shared spectrum that includes the K transmitted data signals is received and sampled (43) to produce a received vector;
   the sampling is conducted (43 or $43_{1-2}$) to produce a plurality of received vector versions ($r_1 ... r_2$);
   a system matrix A and an associated covariance matrix R is produced (48, 49) by using codes and estimated impulse responses of the K data signals (44);
   the covariance matrix R of size N*K by N*K is extended to the size D*K by D*K by zero-padding such that D > [N + (W -1) / Q] where N is a number of data symbols, W is an impulse response length, Q is a spreading factor, and [·] is a round up to an integer function, and approximated as a block circulant matrix $R_c$, (50);
   a diagonal matrix ($\Lambda_R$) of the extended and approximated covariance $R_c$ matrix is determined by taking a block DFT using a block column of the extended and approximated covariance matrix $R_c$, (52);
   the received vector is extended (51) and a Fourier transform thereof is taken (53); the method **characterized in that**:

   for each vector version, a system matrix version ($A^{(1)}$, $A^{(2)}$) using codes ($c^{(k)}$) and estimated impulse responses ($h^{(k)(1)}$, $h^{(k)(2)}$) of the K data signals is produced ($204_{1-m}$) for each of which a respective diagonal matrix version ($\Lambda_A^{(1)}$, $\Lambda_A^{(2)}$) is determined by taking a block DFT of a block column of an extended and approximated block circulant version ($A_C^{(1)}$, $A_C^{(2)}$) of size D*Q by D*K of the respective system matrix version ($231_{1-2}$, $214_{1-2}$, $218_{1-2}$);
   the system matrix A is produced by combining the system matrix versions ($A^{(1)}$, $A^{(2)}$) produced with respect to the plurality of received vector versions from which the covariance matrix R is produced (240);

   each received vector version ($r_1$, $r_2$) is extended ($232_{1-2}$) to a vector ($r_c^{(1)}$, $r_c^{(2)}$) of size D*Q by 1 by inserting zeros and a Fourier transform of each is taken ($200_{1-2}$);
   a plurality of products (228, 229) are produced such that, for each of the received vector versions, a product is taken of:

   the Fourier transform of the extended received vector version ($F(r_c^{(1)})$, $F(r_c^{(2)})$), and

   the received vector version's respective diagonal matrix version ($\Lambda_A^{(1)}$, $\Lambda_A^{(2)}$); the plurality of products is summed (225); and

   data of the K data signals is estimated using an inverse Fourier transform of the summed products (220) and a Cholesky decomposition of the diagonal matrix $\Lambda_R$ derived from the covariance matrix R.

2. The method of claim 1 wherein the Fourier transforms are performed using a prime factor algorithm fast Fourier transform.

3. The method of claim 1 wherein each received vector version corresponds to a different reception antenna.

4. The method of claim 1 wherein the combined signal is sampled at a multiple of a chip rate of the K data signals and each received vector version corresponds to a different chip rate multiple.

5. The method of claim 1 wherein the K data signals are received over a plurality of antennas and sampled at a multiple of a chip rate of the K data signals and each received vector version corresponds to a different antenna and chip rate multiple combination.

6. The method of claim 1 further comprising partitioning the diagonal matrices into a plurality of partitions.

7. The method of claim 1 wherein the estimating data of the K data signals includes performing LU decomposition, forward substitution and backward substitution.

8. The method of claim 1 wherein the estimating data of the K data signals includes performing Cholesky decomposition, forward substitution and backward substitution.

9. The method of claim 1 wherein LU decomposition or Cholesky decomposition is performed on the diagonal of the covariance matrix.

10. A communication station configured to detect data from K data signals transmitted over a shared spectrum in a code division multiple access format having means for sampling a received combined signal over the shared spectrum that includes the K transmitted data signals (43) to produce a received vector, where the_m ans for sampling (43 to $43_{1-2}$) is configured to produce a plurality of received vector versions ($r_1...r_2$), means for producing a system matrix A, means for producing an associated covariance matrix R using codes and estimated impulse responses of the K data signals (44, 48, 49), means for extending and approximating the covariance matrix R of size N*K by N*K as a block circulant matrix $R_c$ (50) of size D*K by D*K using zero padding such that D > [N + (W -1) / Q] , where N is a number of data symbols, W is an impulse response length, Q is a spreading factor, and [·] is a round up to an integer function, means for determining a diagonal matrix ($\Lambda_R$) of the extended and approximated covariance matrix $R_c$ by taking a block DFT using a block column of the extended and approximated covariance matrix $R_c$ (52), and means for extending the received vector (51) and taking a Fourier transform thereof (53), the communication station **characterized in that**:

   the means for producing a system matrix A includes:

   means for producing a system matrix version ($A^{(1)}$, $A^{(2)}$) for each vector version using codes ($c^{(k)}$) and estimated impulse responses ($h^{(k)(1)}$, $h^{(k)(2)}$) of the K data signals ($204_{1-m}$); and
   means for combining the system matrix versions ($A^{(1)}$, $A^{(2)}$, 240) to produce the system matrix A;

   means for determining a respective diagonal matrix version $\left(\Lambda_A^{(1)}, \Lambda_A^{(2)}\right)$ for each vector version by taking a block DFT of a block column of an extended and approximated block circulant version $\left(A_C^{(1)}, A_C^{(2)}\right)$ of size D*Q by D*K of the respective system matrix version ($231_{1-2}$, $214_{1-2}$, $218_{1-2}$);

   means for extending each received vector version ($r_1$, $r_2$, $232_{1-2}$) to a vector $\left(r_c^{(1)}, r_c^{(2)}\right)$ of size D*Q by 1 by inserting zeros and means for taking a Fourier transform of each extended received vector version ($200_{1-2}$);
   means for producing a plurality of products (228, 229) such that, for each of the received vector versions, a product is taken of:

   the Fourier transform of the extended received vector version $\left(F(r_c^{(1)}), F(r_c^{(2)})\right),$ and

   the received vector version's respective diagonal matrix version $\left(\Lambda_A^{(1)}, \Lambda_A^{(2)}\right);$

   means for summing the plurality of products (225); and
   means for estimating data of the K data signals using an inverse Fourier transform of the summed products (220) and a Cholesky decomposition of the diagonal matrix $\Lambda_R$ derived from the covariance matrix R.

11. The communication station of claim 10 wherein the means for taking a Fourier transform of each extended received vector version ($200_{1-2}$) is configured to perform Fourier transforms using a prime factor algorithm fast Fourier transform.

12. The communication station of claim 10 further comprising a plurality of antennas associated with the sampling means such that each received vector version corresponds to a different reception antenna.

**13.** The communication station of claim 10 wherein the sampling means is configured such that the combined signal is sampled at a multiple of a chip rate of the K data signals and each received vector version corresponds to a different chip rate multiple.

**14.** The communication station of claim 10 further comprising a plurality of antennas associated with the sampling means such that the K data signals are received over a plurality of antennas and the sampling means is configured such that the K data signals are sampled at a multiple of a chip rate of the K data signals and each received vector version corresponds to a different antenna and chip rate multiple combination.

**15.** The communication station of claim 10 further comprising means for partitioning the diagonal matrix versions into a plurality of partitions.

**16.** The communication station of claim 10 wherein the means for estimating data of the K data signals is configured to perform LU decomposition, forward substitution and backward substitution.

**17.** The communication station of claim 10 wherein the means for estimating data of the K data signals is configured to perform Cholesky decomposition, forward substitution and backward substitution.

**18.** The communication station of claim 10 wherein the means for estimating data of the K data signals is configured to perform LU decomposition on the diagonal of the covariance matrix.

**19.** The communication station of claim 10 wherein the means for estimating data of the K data signals is configured to perform Cholesky decomposition on the diagonal of the covariance matrix.

**20.** The communication station of any one of claims 10-19 configured as a base station.

**21.** The communication station of any one of claims 10-19 configured as a user equipment.

**Patentansprüche**

**1.** Verfahren zum Detektieren von K Datensignalen, die über ein gemeinsam genutztes Spektrum in einem Codeteilungs-Vielfachzugriffformat übertragen werden, wobei:

über das gemeinsam genutzte Spektrum ein kombiniertes Signal, das die K übertragenen Datensignale umfasst, empfangen und abgetastet wird (43), um einen Empfangsvektor zu erzeugen;
das Abtasten durchgeführt wird (43 oder $43_{1\text{-}2}$), um mehrere Empfangsvektorversionen ($r_1 \dots r_2$) zu erzeugen;
eine Systemmatrix A und eine zugehörige Kovarianzmatrix R erzeugt werden (48, 49), indem Codes und geschätzte Impulsantworten der K Datensignale verwendet werden (44);
die Kovarianzmatrix R der Größe N*K mal N*K auf die Größe D*K mal D*K erweitert wird, indem sie mit Nullen aufgefüllt wird, so daß D > [N + (W - 1) /Q], wobei N eine Anzahl von Datensymbolen ist, W eine Impulsantwortlänge ist, Q ein Spreizfaktor ist und [·] eine Aufrundung auf eine ganzzahlige Funktion ist und als eine blockzirkulante Matrix $R_C$ genähert wird (50);
eine Diagonalmatrix ($\Lambda_R$) der erweiterten und genäherten Kovarianzmatrix $R_C$ bestimmt wird, indem unter Verwendung einer Blockspalte der erweiterten und genäherten Kovarianzmatrix $R_C$ eine Block-DFT durchgeführt wird (52);
der Empfangsvektor erweitert wird (51) und eine Fouriertransformation davon durchgeführt wird (53); wobei das Verfahren **dadurch gekennzeichnet ist, daß**:

für jede Vektorversion eine Systemmatrixversion ($A^{(1)}$, $A^{(2)}$) unter Verwendung von Codes ($c^{(k)}$) und geschätzten Impulsantworten ($h^{(k)^{(1)}}$, $h^{(k)^{(2)}}$) der K Datensignale erzeugt wird ($204_{1\text{-m}}$), wobei für jede von ihnen eine jeweilige Diagonalmatrixversion ($\Lambda_A^{(1)}$, $\Lambda_A^{(2)}$) bestimmt wird, indem eine Block-DFT einer Blockspalte einer erweiterten und genäherten blockzirkulanten Version ($A_C^{(1)}$, $A_C^{(2)}$) der Größe D*Q mal D*K der jeweiligen Systemmatrixversion ($231_{1\text{-}2}$, $214_{1\text{-}2}$, $218_{1\text{-}2}$) durchgeführt wird;
die Systemmatrix A erzeugt wird, indem die Systemmatrixversionen ($A^{(1)}$, $A^{(2)}$) kombiniert werden, die in Bezug auf die mehreren Empfangsvektorversionen erzeugt werden, aus welchen die Kovarianzmatrix R erzeugt wird (240);

jede Empfangsvektorversion ($r_1$, $r_2$) auf einen Vektor ($r_c^{(1)}, r_c^{(2)}$) der Größe D*Q mal 1 erweitert wird, indem Nullen eingefügt werden, und eine Fouriertransformierte von jeder durchgeführt wird (2001-2); mehrere Produkte (228, 229) derart erzeugt werden, daß für jede der empfangenen Vektorversionen ein Produkt genommen wird aus:

der Fouriertransformierten der erweiterten Empfangsvektorversion ($F(r_c^{(1)}), F(r_c^{(2)})$), und

der jeweiligen Diagonalmatrixversion ($\Lambda_A^{(1)}, \Lambda_A^{(2)}$) der Empfangsvektorversion;

die mehreren Produkte summiert werden (225); und
Daten der K Datensignale unter Verwendung einer inversen Fouriertransformation der summierten Produkte (220) und einer Cholesky-Zerlegung der aus der Kovarianzmatrix R abgeleiteten Diagonalmatrix $\Lambda_R$ geschätzt werden.

2. Verfahren nach Anspruch 1, wobei die Fouriertransformationen unter Verwendung einer schnellen Primfaktoralgorithmus-Fouriertransformation durchgeführt werden.

3. Verfahren nach Anspruch 1, wobei jede Empfangsvektorversion einer anderen Empfangsantenne entspricht.

4. Verfahren nach Anspruch 1, wobei das kombinierte Signal mit einem Vielfachen einer Chiprate der K Datensignale abgetastet wird und jede Empfangsvektorversion einem anderen Chipratenvielfachen entspricht.

5. Verfahren nach Anspruch 1, wobei die K Datensignale über mehrere Antennen empfangen werden und mit einem Vielfachen einer Chiprate der K Datensignale abgetastet werden und jede Empfangsvektorversion einer anderen Kombination einer Antenne und eines Chipratenvielfachen entspricht.

6. Verfahren nach Anspruch 1, das ferner das Zerlegen der Diagonalmatrizen in mehrere Teile aufweist.

7. Verfahren nach Anspruch 1, wobei das Schätzen von Daten der K Datensignale das Durchführen einer LU-Zerlegung, Vorwärtssubstitution und Rückwärtssubstitution umfasst.

8. Verfahren nach Anspruch 1, wobei das Schätzen von Daten der K Datensignale das Durchführen einer Cholesky-Zerlegung, Vorwärtssubstitution und Rückwärtssubstitution umfasst.

9. Verfahren nach Anspruch 1, wobei die LU-Zerlegung oder Cholesky-Zerlegung für die Diagonale der Kovarianzmatrix durchgeführt wird.

10. Kommunikationsstation, die aufgebaut ist, um Daten aus K Datensignalen zu detektieren, die über ein gemeinsam genutztes Spektrum in einem Codeteilungs-Vielfachzugriffformat übertragen werden, die eine Einrichtung hat, um ein über das gemeinsam genutzte Spektrum übertragenes kombiniertes Empfangssignal, das die K übertragenen Datensignale umfasst, abzutasten (43), um einen Empfangsvektor zu erzeugen, wobei die Einrichtung zum Abtasten (43 bis $43_{1-2}$) aufgebaut ist, um mehrere Empfangsvektorversionen ($r_1 ... r_2$) zu erzeugen, eine Einrichtung zum Erzeugen einer Systemmatrix A, eine Einrichtung zum Erzeugen einer zugehörigen Kovarianzmatrix R, indem Codes und geschätzte Impulsantworten der K Datensignale verwendet werden (44, 48, 49), eine Einrichtung zum Erweitern und Annähern der Kovarianzmatrix R der Größe N*K mal N*K als eine blockzirkulante Matrix $R_c$ (50) der Größe D*K mal D*K, indem sie mit Nullen aufgefüllt wird, so daß D > [N + (W - 1) / Q], wobei N eine Anzahl von Datensymbolen ist, W eine Impulsantwortlänge ist, Q ein Spreizfaktor ist und [·] eine Aufrundung auf eine ganzzahlige Funktion ist, eine Einrichtung zum Bestimmen einer Diagonalmatrix ($\Lambda_R$) der erweiterten und genäherten Kovarianzmatrix $R_c$, indem unter Verwendung einer Blockspalte der erweiterten und genäherten Kovarianzmatrix $R_c$ eine Block-DFT durchgeführt wird (52), und eine Einrichtung zum Erweitern des Empfangsvektors (51) und Durchführen einer Fouriertransformation davon (53), wobei die Kommunikationsstation **dadurch gekennzeichnet ist, daß**:

die Einrichtung zum Erzeugen einer Systemmatrix A umfasst:

eine Einrichtung zum Erzeugen einer Systemmatrixversion ($A^{(1)}$, $A^{(2)}$) für jede Vektorversion unter Verwendung von Codes ($c^{(k)}$) und geschätzten Impulsantworten ($h^{(k)(1)}$, $h^{(k)(2)}$) der K Datensignale ($204_{1\text{-}m}$) ; und eine Einrichtung zum Kombinieren der Systemmatrixversionen ($A^{(1)}$, $A^{(2)}$, 240), um die Systemmatrix A zu erzeugen;

eine Einrichtung zum Bestimmen einer jeweiligen Diagonalmatrixversion ($\Lambda_A^{(1)}$, $\Lambda_A^{(2)}$) für jede Vektorversion, indem eine Block-DFT einer Blockspalte einer erweiterten und genäherten blockzirkulanten Version ($A_C^{(1)}$, $A_C^{(2)}$) der Größe D*Q mal D*K der jeweiligen Systemmatrixversion ($231_{1\text{-}2}$, $214_{1\text{-}2}$, $218_{1\text{-}2}$) durchgeführt wird;

eine Einrichtung zum Erweitern jeder Empfangsvektorversion ($r_1$, $r_2$, $232_{1\text{-}2}$) auf einen Vektor ($r_c^{(1)}$, $r_c^{(2)}$) der Größe D*Q mal 1, indem Nullen eingefügt werden,
und eine Einrichtung zum Durchführen einer Fouriertransformation jeder erweiterten Empfangsvektorversion ($200_{1\text{-}2}$);
eine Einrichtung zum Erzeugen mehrerer Produkte (228, 229) derart, daß für jede der empfangenen Vektorversionen ein Produkt genommen wird aus:

der Fouriertransformierten der erweiterten Empfangsvektorversion ($F(r_c^{(1)})$, $F(r_c^{(2)})$), und

der jeweiligen Diagonalmatrixversion ($\Lambda_A^{(1)}$, $\Lambda_A^{(2)}$) der Empfangsvektorversion;

eine Einrichtung zum Summieren der mehreren Produkte (225); und
eine Einrichtung zum Schätzen von Daten der K Datensignale unter Verwendung einer inversen Fouriertransformation der summierten Produkte (220) und einer Cholesky-Zerlegung der aus der Kovarianzmatrix R abgeleiteten Diagonalmatrix $\Lambda_R$.

11. Kommunikationsstation nach Anspruch 10, wobei die Einrichtung zum Durchführen einer Fouriertransformation von jeder erweiterten Empfangsvektorversion ($200_{1\text{-}2}$) aufgebaut sind, um die Fouriertransformationen unter Verwendung einer schnellen Primfaktoralgorithmus-Foutiertransformation durchzuführen.

12. Kommunikationsstation nach Anspruch 10, die ferner mehrere Antennen aufweist, die zu der Abtasteinrichtung gehören, so daß jede Empfangsvektorversion einer anderen Empfangsantenne entspricht.

13. Kommunikationsstation nach Anspruch 10, wobei die Abtasteinrichtung derart aufgebaut ist, daß das kombinierte Signal mit einem Vielfachen einer Chiprate der K Datensignale abgetastet wird und jede Empfangsvektorversion einem anderen Chipratenvielfachen entspricht.

14. Kommunikationsstation nach Anspruch 10, die ferner mehrere Antennen aufweist, die zu der Abtasteinrichtung gehören, so daß die K Datensignale über mehrere Antennen empfangen werden, und die Abtasteinrichtung derart aufgebaut ist, daß die K Datensignale mit einem Vielfachen einer Chiprate der K Datensignale abgetastet werden, und jede Empfangsvektorversion einer anderen Kombination einer Antenne und eines Chipratenvielfachen entspricht.

15. Kommunikationsstation nach Anspruch 10, die ferner eine Einrichtung zum Zerlegen der Diagonalmatrixversionen in mehrere Teile aufweist.

16. Kommunikationsstation nach Anspruch 10, wobei die Einrichtung zum Schätzen der Daten der K Datensignale aufgebaut ist, um eine LU-Zerlegung, Vorwärtssubstitution und Rückwärtssubstitution durchzuführen.

17. Kommunikationsstation nach Anspruch 10, wobei die Einrichtung zum Schätzen der Daten der K Datensignale aufgebaut ist, um eine Cholesky-Zerlegung, Vorwärtssubstitution und Rückwärtssubstitution durchzuführen.

18. Kommunikationsstation nach Anspruch 10, wobei die Einrichtung zum Schätzen der Daten der K Datensignale aufgebaut ist, um die LU-Zerlegung für die Diagonale der Kovarianzmatrix durchzuführen.

19. Kommunikationsstation nach Anspruch 10, wobei die Einrichtung zum Schätzen der K Datensignale aufgebaut ist, um die Cholesky-Zerlegung für die Diagonale der Kovarianzmatrix durchzuführen.

**20.** Kommunikationsstation nach einem der Ansprüche 10 - 19, die als eine Basisstation aufgebaut ist.

**21.** Kommunikationsstation nach einem der Ansprüche 10 - 19, die als ein Benutzergerät aufgebaut ist.

**Revendications**

**1.** Procédé de détection de données dans des signaux de données K transmis sur un spectre partagé dans un format d'accès multiple à répartition par code dans lequel :

un signal combiné sur le spectre partagé qui inclut les signaux de données transmis K est reçu et échantillonné (43) pour produire un vecteur reçu ;
l'échantillonnage est conduit (43 ou $43_{1-2}$) pour produire une pluralité de versions du vecteur reçu ($r_1...r_2$) ;
une matrice de système A et une matrice de covariance associée R sont produites (48, 49) en utilisant des codes et des réponses impulsionnelles estimées des signaux de données K (44) ;
la matrice de covariance R de taille N*K par N*K est étendue jusqu'à la taille D*K par D*K grâce à un remplissage par des zéros, de telle sorte que $D > [N + (W - 1) / Q]$ où N est un nombre de symboles de données, W est une longueur de réponse impulsionnelle, Q est un coefficient d'étalement, et le [·] est un arrondi par excès à une fonction entière, et approchée sous la forme d'une matrice circulante par bloc $R_c$ (50) ;
une matrice diagonale ($\Lambda_R$) de la matrice de covariance étendue et approchée $R_c$ est déterminée en prenant un bloc DFT en utilisant une colonne de blocs de la matrice de covariance étendue et approchée $R_c$, (52) ;
le vecteur reçu est étendu (51) et une transformée de Fourier de celui-ci est prise (53) ; le procédé étant

**caractérisé en ce que** :

pour chaque version du vecteur, une version de la matrice de système ($A^{(1)}$, $A^{(2)}$) utilisant les codes ($c^{(k)}$) et des réponses impulsionnelles estimées ($h^{(k)(1)}$, $h^{(k)(2)}$) des signaux de données K est produite ($204_{1-m}$) pour chacun desquels une version de la matrice diagonale respective ( $\Lambda_A^{(1)}$ , $\Lambda_A^{(2)}$ ) est déterminée en prenant un bloc DFT d'une colonne de blocs d'une version circulante étendue et approchée ( $A_C^{(1)}$ , $A_C^{(2)}$ ) de la taille D*Q par D*K de la version de la matrice de système respective ($231_{1-2}$, $214_{1-2}$, $218_{1-2}$) ;
la matrice de système A est produite en combinant les versions de matrice de système ($A^{(1)}$, $A^{(2)}$) produites par rapport à la pluralité de versions du vecteur reçu à partir desquelles la matrice de covariance est reproduite (240) ;
chaque version du vecteur reçu ($r_1$, $r_2$) est étendue ($232_{1-2}$) à un vecteur ($r_c^{(1)}$, $r_c^{(2)}$) de taille D*Q par 1 en insérant des zéros et une transformée de Fourier de chacun est prise ($200_{1-2}$) ;
une pluralité de produits (228, 229) est produite, de telle sorte que pour chacune des versions du vecteur reçu, un produit est pris de :

la transformée de Fourier de la version du vecteur reçu étendue *(F($r_c^{(1)}$), F($r_c^{(2)}$))*, et

la version de la matrice diagonale respective de la version du vecteur reçu ( $\Lambda_A^{(1)}$, $\Lambda_A^{(2)}$ );

on fait la somme de la pluralité de produits (225) ; et
les données des signaux de données K sont estimées en utilisant la transformée de Fourier inverse des produits dont on a fait la somme (220) et une décomposition de Cholesky de la matrice diagonale $\Lambda_R$ dérivée de la matrice de covariance R.

**2.** Procédé selon la revendication 1, dans lequel les transformées de Fourier sont exécutées en utilisant une transformée de Fourier rapide d'algorithme de facteur principal.

**3.** Procédé selon la revendication 1, dans lequel la version du vecteur reçu correspond à une antenne de réception différente.

**4.** Procédé selon la revendication 1, dans lequel le signal combiné est échantillonné à un multiple d'un débit des éléments des signaux de données K et chaque version du vecteur reçu correspond à un multiple du débit des éléments différent.

**5.** Procédé selon la revendication 1, dans lequel les signaux de données K sont reçus sur une pluralité d'antennes et échantillonnés à un multiple d'un débit des éléments des signaux de données K, et chaque version du vecteur reçu correspond à une combinaison d'antenne et de multiple du débit des éléments différents.

**6.** Procédé selon la revendication 1 comprenant en outre la segmentation des matrices diagonales en une pluralité de segments.

**7.** Procédé selon la revendication 1, dans lequel les données d'estimation des signaux de données K incluent la réalisation d'une décomposition LU, d'une substitution avant et d'une substitution arrière.

**8.** Procédé selon la revendication 1, dans lequel les données d'estimation des signaux de données K incluent la réalisation d'une décomposition de Cholesky, d'une substitution avant et d'une substitution arrière.

**9.** Procédé selon la revendication 1, dans lequel la décomposition LU ou la décomposition de Cholesky est effectuée sur la diagonale de la matrice de covariance.

**10.** Station de communication configurée pour détecter des données provenant des signaux de données K transmis sur un spectre partagé dans un format d'accès multiple par répartition par code ayant des moyens d'échantillonnage d'un signal combiné reçu sur le spectre partagé qui inclut les signaux de données transmis K (43) pour produire un vecteur reçu, dans lequel les moyens d'échantillonnage (43 à $43_{1\text{-}2}$) sont configurés pour produire une pluralité de versions du vecteur reçu ($r_1...r_2$), des moyens de production d'une matrice de système A, des moyens de production d'une matrice de covariance associée R utilisant des codes et des réponses impulsionnelles estimées des signaux de données K (44, 48, 49), des moyens d'extension et d'approximation de la matrice de covariance R de taille N*K par N*K en tant que matrice circulante par bloc $R_c$ (50) de taille D*K par D*K en utilisant un remplissage par des zéros, de telle sorte que D > [$N+(W\text{-}1)/Q$] où N est un nombre de symboles de données, W est une longueur de réponse impulsionnelle, Q est un coefficient d'étalement, et [·] est un arrondi par excès à une fonction entière, des moyens pour déterminer une matrice diagonale ($\Lambda_R$) de la matrice de covariance étendue et approchée $R_c$ en prenant un bloc DFT en utilisant une colonne de blocs de la matrice de covariance étendue et approchée $R_c$ (52) et des moyens d'extension du vecteur reçu (51) et prendre une transformée de Fourier de celui-ci (53), la station de communication étant **caractérisée en ce que** :

le moyen de production d'une matrice de système A inclut :

des moyens de production d'une version de la matrice de système ($A^{(1)}$, $A^{(2)}$) pour chaque version du vecteur utilisant des codes ($c^{(k)}$) et des réponses impulsionnelles estimées ($h^{(k)(1)}$, $h^{(k)(2)}$) des signaux de données K ($204_{1\text{-}m}$) ; et
des moyens de combinaison des versions de matrice de système ($A^{(1)}$, $A^{(2)}$, 240) pour produire la matrice de système A ;

des moyens de détermination d'une version de la matrice diagonale respective ($\Lambda_A^{(1)}$, $\Lambda_A^{(2)}$) pour chaque version du vecteur en prenant un bloc DFT d'une colonne de blocs d'une version circulante par bloc étendue et approchée ($A_C^{(1)}$, $A_C^{(2)}$) de taille D*Q par D*K de la version de la matrice de système respective ($231_{1\text{-}2}$, $214_{1\text{-}2}$, $218_{1\text{-}2}$) ;
des moyens d'extension de chaque version du vecteur reçu ($r_1$, $r_2$, $232_{1\text{-}2}$) à un vecteur ($r_c^{(1)}$, $r_c^{(2)}$) de taille D*Q par 1 en insérant des zéros et un moyen permettant de prendre une transformée de Fourier de chaque version du vecteur reçu étendue ($200_{1\text{-}2}$) ;
des moyens de production d'une pluralité de produits (228, 229) de telle sorte que, pour chacune des versions du vecteur reçu, un produit est pris de :

la transformée de Fourier de la version du vecteur reçu étendue (F($rc^{(1)}$), F($r_c^{(2)}$), et

la version de la matrice diagonale respective de la version du vecteur reçu ($\Lambda_A^{(1)}$, $\Lambda_A^{(2)}$);

un moyen permettant de faire la somme de la pluralité de produits (225) ; et
des moyens permettant d'estimer les données des signaux de données K en utilisant une transformée de Fourier inverse des produits dont on a fait la somme (220) et une décomposition Cholesky de la matrice diagonale $\Lambda_R$ dérivée de la matrice de covariance R.

11. Station de communication de la revendication 10, dans laquelle les moyens permettant de prendre une transformée de Fourier de chaque version du vecteur reçu étendue ($200_{1-2}$) doivent être configurés pour effectuer les transformées de Fourier en utilisant une transformée de Fourier rapide d'algorithme de facteur principal.

12. Station de communication selon la revendication 10, comprenant en outre une pluralité d'antennes associées avec des moyens d'échantillonnage, de telle sorte que chaque version du vecteur reçu correspond à une antenne de réception différente.

13. Station de communication selon la revendication 10, dans laquelle le moyen d'échantillonnage est configuré, de telle sorte que le signal combiné est échantillonné à un multiple de débit des éléments des signaux de données K et chaque version du vecteur reçu correspond à un multiple de débit des éléments différent.

14. Station de communication selon la revendication 10, comprenant en outre une pluralité d'antennes associées avec le moyen d'échantillonnage, de telle sorte que les signaux de données K sont reçus sur une pluralité d'antennes et que les moyens d'échantillonnage sont configurés, de telle sorte que les signaux de données K sont échantillonnés à un multiple d'un débit des éléments des signaux de données K et chaque version du vecteur reçu correspond à une combinaison d'antenne et de multiple du débit des éléments différents.

15. Station de communication selon la revendication 10 comprenant en outre des moyens permettant de segmenter des versions de matrice diagonale en une pluralité de segments.

16. Station de communication selon la revendication 10 dans laquelle les moyens d'estimation des données des signaux de données K sont configurés pour effectuer une décomposition LU, une substitution avant et une substitution arrière.

17. Station de communication selon la revendication 10, dans laquelle les moyens permettant d'estimer les données des signaux de données K sont configurés pour effectuer une décomposition de Cholesky, une substitution avant et une substitution arrière.

18. Station de communication selon la revendication 10, dans laquelle les moyens permettant d'estimer les données des signaux de données K sont configurés pour effectuer une décomposition LU sur la diagonale de la matrice de covariance.

19. Station de communication selon la revendication 10, dans laquelle les moyens permettant d'estimer les données des signaux de données K sont configurés pour effectuer une décomposition de Cholesky sur la diagonale de la matrice de covariance.

20. Station de communication selon l'une quelconque des revendications 10 à 19 configurée en tant que station de base.

21. Station de communication selon l'une quelconque des revendications 10 à 19 configurée en tant qu'équipement utilisateur.

<u>10</u>

$14_1$

UE

$\bigwedge 12_3$

$\bigwedge 12_1$

$\bigwedge 12_2$

$14_3$

$14_2$

UE

UE

$\bigwedge 12_4$

$\bigwedge 12_5$

FIG. 1

COMMUNICATION BURST   <u>16</u>

| 22 | 20 | 24 | 18 |
|---|---|---|---|
| DATA FIELD 1 | MIDAMBLE | DATA FIELD 2 | GUARD PERIOD |

← ONE TIME SLOT →

FIG. 3

FIG. 2

26

28

DATA GENERATOR — 32

SPREADING AND MODULATION DEVICE — 34

36

38

COS ωt

WIRELESS RADIO CHANNEL — 30

40

42

COS ωt

SAMPLING DEVICE — 43

RECEIVED CHIPS, r — 46

EFFICIENT JOINT DETECTION DEVICE

d

CHANNEL RESPONSE, H

CHANNEL ESTIMATION DEVICE — 44

29

48 —
DETERMINE THE SYSTEM MATRIX, A, USING
THE ESTIMATED CHANNEL IMPULSE
RESPONSE, $\underline{h}^{(k)}$, AND THE SPREADING CODE,
$\underline{c}^{(k)}$, FOR EACH BURST

49 —
FORM THE COVARIANCE MATRIX R:
$R = A^H A$  FOR ZF - BLE
$R = A^H A + \sigma^2 I$  FOR MMSE - BLE

50 —
TO INCLUDE ALL OF THE RECEIVED CHIP SYMBOLS
IN THE OBSERVATION INTERVAL, THE SYSTEM
MATRIX A AND ITS COVARIANCE MATRIX R ARE
EXTENDED TO BLOCK SQUARE MATRICES: THE
EXTENDED A OF SIZE $D \cdot Q x D \cdot K$ AND THE
EXTENDED R OF SIZE $D \cdot K x D \cdot K$. USING THEIR
BANDED BLOCK - TOEPLIZ STRUCTURES, BOTH
EXTENDED MATRICES ARE APPROXIMATED TO BLOCK
CIRCULANT MATRICES $A_c$ AND $R_c$, SEPARATELY.

51 —
BECAUSE OF THE EXTENSION OF A AND R, THE
RECEIVED VECTOR, $\underline{r}$, IS EXTENDED TO THE
VECTOR, $\underline{r}_c$, BY INSERTING ZEROS.

52 —
A BLOCK - DIAGONAL MATRIX, $\Lambda$, IS DETERMINED
BY TAKING A BLOCK DFT OF THE FIRST BLOCK
COLUMN OF $R_c$

TO FIG. 4B

FIG. 4A

FROM FIG. 4A

53 — THE BLOCK DFT OF MATCHED FILTERING $F(A^H \underline{r})$ IS APPROXIMATED BY $F(A_c^H \underline{r}_c)$. IT IS CALCULATED BY TAKING A BLOCK DFT OF $A_c$ AND $\underline{r}_c$

55 — TO FIND $\underline{y}^{(i)}$, PERFORM FORWARD SUBSTITUTION, $L^{(i)} \underline{y}^{(i)} = \Lambda_A^{(i)H} F(\underline{r}_c)^{(i)}$ WHERE $\Lambda_A^{(i)}$ IS THE ITH MAIN DIAGONAL BLOCK OF $Q \times K$ IN $\Lambda_A$ AND $F(\underline{r}_c)^{(i)}$ IS THE ITH BLOCK OF SIZE $Q \times l$ IN $F(\underline{r}_c)$. HERE, $\Lambda_A$ ARE THE BLOCK DFT OF THE FIRST BLOCK COLUMN OF $A_c$ AND $F(\underline{r}_c)$ IS THE BLOCK DFT OF THE VECTOR $\underline{r}_c$.

56 — PERFORM BACKWARD SUBSTITUTION TO SLOVE FOR THE *ith* BLOCK $F(\underline{d})^{(i)}$ OF SIZE $K \times l$ OF $F(\underline{d})$, $U^{(i)} F(\underline{d})^{(i)} = \underline{y}^{(i)}$

57 — THE ESTIMATED DATA VECTOR, $\underline{d}$, IS DETERMINED BY TAKING A BLOCK INVERSE DFT OF $F(\underline{d})$.

# FIG. 4B

COMMUNICATION 16
BURST

ONE TIME SLOT

| DATA FIELD 1 | MIDAMBLE | DATA FIELD 2 | GUARD PERIOD |
| 22 | 20 | 24 | 18 |

PROCESSING LENGTH TO INCLUDE LAST SYMBOLS IMPULSE RESPONSE — W-1

PROCESSING LENGTH TO HAVE A DESIRED PFA LENGTH

PROCESSING LENGTH TO INCLUDE LAST SYMBOLS IMPULSE RESPONSE — W-1

PROCESSING LENGTH TO HAVE A DESIRED PFA LENGTH

FIG. 5

FIG. 6

FIG. 7

FIG. 8

FIG. 9

34

FIG. 10

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 02089346 A1

**Non-patent literature cited in the description**

- **M. Vollmer et al.** Comparative Study of Joint-Detection Techniques for TD-CDMA Based Mobile Radio Systems. *IEEE Journal on selected areas in communications,* August 2001, vol. 19 (8